# EUROPÄISCHE PATENTANMELDUNG

(11) **EP 2 305 529 A2**
(43) Veröffentlichungstag der Anmeldung: **06.04.2011**
(21) Anmeldenummer: 10184492.6
(22) Anmeldetag: 30.09.2010
(51) Int. Cl.: B61D 17/04, B62D 31/02

(54) **Modularer Wagenkasten**

(30) Priorität: 30.09.2009 DE 102009045202
(71) Anmelder: Deutsches Zentrum für Luft- und Raumfahrt e.V., 51147 Köln (DE)
(72) Erfinder: Nickel, Jörg, 38104, Braunschweig (DE); Assing, Heiko, 38110, Braunschweig (DE); Hühne, Dr. Christian, 38106, Braunschweig (DE)
(74) Vertreter: Rehberg Hüppe + Partner

(57) **Zusammenfassung**

Die Erfindung betrifft einen Wagenkasten (10) für ein Personen-Schienenfahrzeug.

Erfindungsgemäß ist der Wagenkasten (10) mit Wagenkastenmodulen (11a; 11b; 11c) gebildet, die stirnseitig über rahmenartige Kopplungsmodule miteinander verbunden sind.

Die Erfindung findet insbesondere Einsatz für einen Wagenkasten in Leichtbauweise für Hochgeschwindigkeits-Schienenfahrzeuge.

## Beschreibung

### TECHNISCHES GEBIET DER ERFINDUNG

Die Erfindung betrifft einen modularen Wagenkasten für ein Personen-Schienenfahrzeug.

### STAND DER TECHNIK

Einen Überblick über den Stand der Technik zu der konstruktiven Gestaltung sowie Fertigung von Wagenkästen gibt die Dissertation
H. Schmidt, TU Berlin, 2002 mit dem Titel "Beitrag zum Variantenmanagement und zur Prozessoptimierung im Wagenkastenbau von Schienenfahrzeugen". [1]

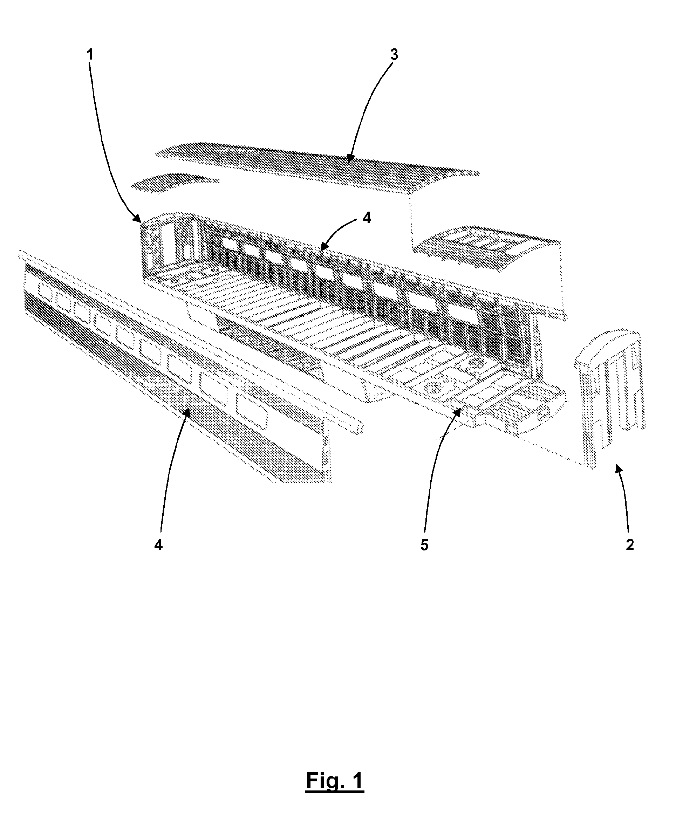

Ein Wagenkasten besteht in klassischer Bauweise gemäß Fig. 1 aus einer röhrenartigen Konstruktion mit durch Stirnseiten 1, 2 gebildeten Abschlüssen, die zumeist als Übergänge zwischen benachbarten Wagenkästen ausgeführt sind, sowie Türen und Fenstern und ggf. einem Führerhaus. Die einzelnen Bestandteile des Wagenkastens sind bei herkömmlicher Bauweise vollständig miteinander verschweißt. In einen so gebildeten Rohbau des Wagenkastens erfolgt in aneinander anschließenden, separaten Bearbeitungsschritten dann die Einbringung einer Isolierung, Verkleidung, Verkabelung sowie der Innenausbau. Bei moderneren Bauformen erfolgt bereits eine konstruktive und fertigungstechnische Unterteilung in einzelne Module Dach 3, Seitenwände 4 und Boden 5 bzw. Untergestell. Wagenkästen für Personen-Schienenfahrzeuge besitzen als Schnittstelle zum Fahrwerk Spurkranzräder, die entweder paarweise auf einer Welle gekoppelt sind (Radsätze) oder als Einzelräder ausgeführt sind. Die Anbindung des Fahrwerks an den Wagenkasten erfolgt über das Untergestell, welches üblicherweise durch den Boden 5 sowie untere Längs- und Querträger gebildet ist. Untergestelle werden vorwiegend in Differentialbauweise aus massiven Stahl- oder Edelstahlhalbzeugen gefertigt. Dem Untergestell kommt eine wesentliche Funktion der Kraftaufnahme und -übertragung zu. So werden neben der Fahrwerksanbindung auch Puffer- und Kuppelkomponenten am Untergestell befestigt, durch die hohe Kräfte, insbesondere Längskräfte, eingeleitet und weitergegeben werden. Angebunden an das Untergestell ist der Wagenkasten, welcher zur Aufnahme der Passagiere sowie sämtlicher Innenausstattungskomponenten dient.

Grundsätzlich sind folgende Bauweisen für Wagenkästen zu unterscheiden:

### a) Klassische Differentialbauweise

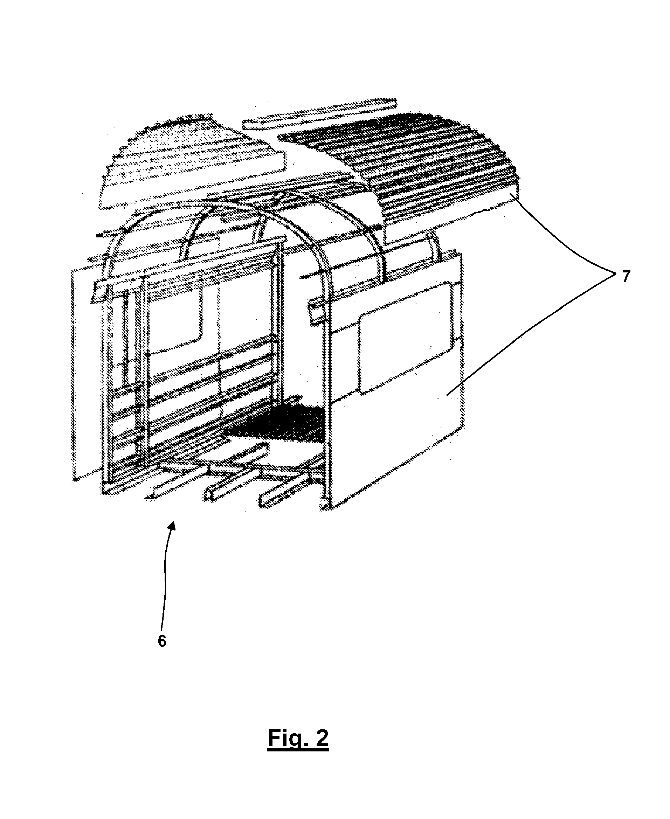

Die klassische Differentialbauweise (vgl. Fig. 2) trennt funktional zwischen einer tragenden, fachwerkartigen, mit Spanten und Stringern gebildeten Tragstruktur 6 einerseits und einer Verkleidung 7, die mit Blechen gebildet sein kann. Die Verbindung der Elemente der Tragstruktur 6 und der Verkleidung 7 erfordert unter Umständen wagenlange Schweißnähte. Für die Tragstruktur 6 können hochfeste Aluminium- oder Stahlprofile eingesetzt werden. Die Differentialbauweise hat den Vorteil, dass sich ohne schwerwiegende Eingriffe in den Herstellungsprozess und Variation der einzusetzenden Werkzeuge eine große Variationsbreite für den derart gebildeten Wagenkasten ergibt. Infolge der funktionalen Trennung zwischen Tragstruktur 6 einerseits und Verkleidung 7 andererseits können gezielt geeignete Materialien und Geometrien für die Tragstruktur 6 und die Verkleidung 7 ausgewählt werden. In neueren Entwicklungen werden neben hochlegierten Metallen auch zunehmend Faserverbundkunststoffe sowohl für die Verkleidung 7 als auch für die Tragstruktur 6 eingesetzt. Die Differentialbauweise findet insbesondere für kleinere Fahrzeugserien Anwendung. Nachteilig ist der unter Umständen erforderliche hohe Wärmeeintrag für die schweißende Verbindung der einzelnen Elemente, welcher neben der Erhöhung der Herstellungskosten auch zu einem unerwünschten Verzug der beteiligten Bauelemente führen kann. Weiterhin kann ein umfangreiches Nacharbeiten wie beispielsweise ein Richten, Schleifen, Spachteln den Fertigungsaufwand erhöhen. Schließlich führt der erläuterte Herstellungsprozess zu langen Bauzeiten infolge der sequenziellen Bearbeitungsschritte, für welche kaum eine Parallelfertigung möglich ist.

### b) Integralbauweise (auch Großprofilbauweise genannt)

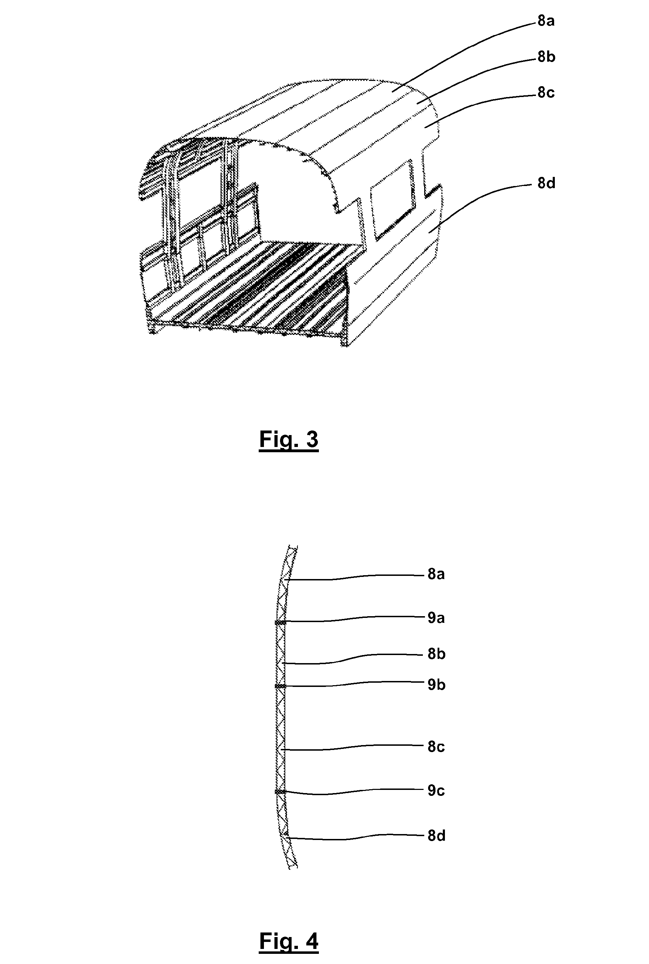

Bei dieser Bauweise kommen Vollprofile von bis zu 700 mm Breite und Hohlprofile von 550 mm Breite zum Einsatz, die beispielsweise als Strangpressprofile gefertigt sind. Fig. 3 und 4 zeigen eine derartige aus dem Stand der Technik bekannte Ausführungsform, bei welcher Strangpressprofile 8a, b, ... Wagenkastenmodule bilden, die sich in Längsrichtung des Wagenkastens erstrecken und im Bereich ihrer quer zur Umfangsrichtung orientierten Stirnseiten über Schweißnähte 9a, b, ... miteinander verschweißt sind. Die profilierte Struktur der Strangprofile 8 führt auf eine Steifigkeit, die den Einsatz einer zusätzlichen Tragstruktur wie bei der Differentialbauweise überflüssig machen kann. Üblicherweise sind über den Umfang 5 bis 10 derartige Strangprofile 8 miteinander verbunden. Der Einsatz großflächiger Strangprofile 8 reduziert den Montageaufwand in der Rohbaufertigung und vereinfacht die Komplettierung des Wagenkastens durch die Integration von Befestigungsschienen für den Innenausbau. Das Verschweißen der Strangprofile erfolgt üblicherweise durch numerisch gesteuerte Großschweißanlagen, wobei vorzugsweise ein kontinuierliches Schweißen über die gesamte Fahrzeuglängsachse erfolgt. Für die unterschiedlichen Strangprofile 8 ist eine Fertigung mit individuellen Fertigungsvorgängen und Werkzeugen erforderlich, was erhöhte Werkzeugkosten bedingt, so dass eine Integralbauweise für Wagenkästen nur bei größeren Stückzahlen rentabel ist. Soll ein schweißwärmebedingter Verzug für diese Bauart vermieden werden, kommen zunehmend wärmelose Fügetechniken zum Einsatz, die aus einer Kombination von Form- und Kraftschluss bestehen können.

### c) Verbundbauweise

Die Verbundbauweise ist an die Differentialbauweise angelehnt, wobei jedoch die Verkleidung der metallischen Tragstruktur in diesem Fall mit dem Einsatz nichtmetallischer Werkstoffe, insbesondere von Faserverbundwerkstoffen, erfolgt. Die mechanische Tragfunktion wird in diesem Fall nahezu ausschließlich von der metallischen Tragstruktur übernommen.

### d) Sonderbauweisen

Hierunter werden die Bauweisen unter Verwendung alternativer, vielfach nichtmetallischer Werkstoffe und innovativer Fertigungsverfahren subsumiert, wobei eine Umsetzung heute meist nur für Machbarkeitsstudien und kleinere Sonderanwendungen, erfolgt. Ein Beispiel eines derartigen Fertigungsverfahrens sind Wickel- und Schalenbauweisen.

### e) Stahl-Leichtbauweise

Hierunter wird eine Differentialbauweise verstanden unter Einsatz hochlegierter Edelstähle mit verbesserten mechanischen Eigenschaften, wodurch eine Gewichtsreduzierung erzielt werden kann und schweißverzugsbedingte Nacharbeiten minimiert werden. Auch hier kommt es zum verstärkten Einsatz von Kaltfügeverfahren wie beispielsweise Kleben oder Nieten.

### f) Hybridbauweise

Hybridbauweisen setzen verschiedene, belastungsspezifische Werkstoffe ein. Hauptsächlich Einsatz finden Edelstahl- oder Aluminiumstrukturen und großflächige Kunststoffsegmente, die zum Teil als Strukturbauteile ausgeführt sind.

Unter der Bezeichnung "modulare Bauweisen" werden in jüngster Zeit Bauformen für Wagenkästen zusammengefasst, die im Gegensatz zu konventionellen Bauweisen den Rohbau nicht mehr als einteilige, untrennbare Baugruppe darstellen. Vielmehr wird hier der Wagenkasten in mehrere Bereiche, die Wagenkastenmodule, unterteilt, wobei die räumliche Form des Wagenkastens erst später durch die Montage dieser Module entsteht. Die einzelnen Wagenkastenmodule selbst können hierbei in beliebiger Fertigungsweise, beispielsweise in Differentialbauweise oder Integralbauweise, hergestellt sein. Die Modularisierung kann mit einer Längsteilung (Trennebene benachbarter Wagenkastenmodule in Richtung der Längsachse des Schienenfahrzeugs verlaufend), Querteilung (Trennebene benachbarter Wagenkastenmodule quer zu der Längsachse des Schienenfahrzeugs verlaufend) oder einer Kombinationsteilung des Wagenkastens in die einzelnen Wagenkastenmodule erfolgen. Bei geeigneter Modulteilung kann eine Vormontage der Innenausstattung der Wagenkastenmodule erfolgen. Dies beinhaltet zum Teil eine Aufhebung der fertigungstechnischen Trennung von Rohbau und Innenausbau. Eine Längsteilung erfolgt beispielsweise mit den Modulen Untergestell, Seitenwände, Fahrzeugdach und Fahrzeugenden. Bei einer Querteilung des Wagenkastens können Module für unterschiedliche Funktionsbereiche in unterschiedlichen Längen gebildet werden. Die Abgrenzung der Funktionsbereiche kann beispielsweise über die Fahrzeugenden, Tür- oder Fensterbereiche, fahrwerks- bzw. antriebstechnische Bereiche oder die Ausstattung des Fahrzeuginnenraums erfolgen.

Es besteht ein zunehmender Bedarf an einer kostengünstigen Leichtbauweise und Fertigungstechnologie für Wagenkästen von Schienenfahrzeugen, insbesondere für den Hochgeschwindigkeits-Personenverkehr mit Reisegeschwindigkeiten von bis zu > 400 km/h. Dabei wäre es wünschenswert, den sitzplatzbezogenen Energieverbrauch um 50 % zu reduzieren bei gleichzeitiger Steigerung der Fahrgeschwindigkeit um 25 % oder mehr gegenüber heutigen ICE 3 Fahrzeugen, die eine Reisegeschwindigkeit von 330 km/h besitzen. Wünschenswert wäre eine ca. 30 %ige Gewichtseinsparung für den Rohbau des Wagenkastens gegenüber herkömmlichen Bauweisen bei gleichen oder nur geringfügig höheren Kosten.

Diese und weitere Randbedingungen führen insbesondere auf ein Doppelstock-Triebzugkonzept mit verteilten Antrieben und neuartigen Einzelachs-Einzelradantriebsfahrwerken (im Folgenden "EEF") mit reduzierter Achszahl, d. h. mit nur vier Rädern in EEF-Anordnung je Wagenkasten gegenüber bisher acht Rädern, angeordnet in zwei Drehgestellen. Aufgrund der vorgegebenen und einzuhaltenden Achslastgrenze (statisch) von weniger als 17 t im Hochgeschwindigkeitsverkehr ist damit bspw. das Fahrzeuggewicht eines Wagenkastens mit voller Beladung auf 34 t limitiert gegenüber sonst 68 t bei klassischer Drehgestellausführung mit insgesamt vier Achsen je Wagen.

Andererseits muss ein Wagenkasten die Brandschutzanforderungen gemäß EN45545 erfüllen, so dass insbesondere keine brandfördernden Stoffe eingesetzt sind und keine toxischen Brandgase entstehen können. Die Crash-Normen sind ebenfalls zu erfüllen mit der erforderlichen hohen Energieaufnahme sowie einem duktilen Materialverhalten, welches nicht zu scharfkantigen Bruchstücken führt. Weitere Konstruktionsanforderungen folgen aus der Wahl der Bauweise, der Modularisierung, der eingesetzten Werkstoffe, der optimierten Lasteinleitung, dem Erfordernis der Medienführung und Klimatisierung, der Verkabelung, den erforderlichen Antennen, der Sensorik sowie Aktuatorik, der Schall- und Wärmedämmung, dem Innenausbau einschließlich einer Beleuchtung und dem geschaffenen Ambiente, den eingesetzten Befestigungselementen, den Scharnieren und Dichtungen sowie den geforderten thermischen und akustischen Eigenschaften.

Während obige bekannten Ausführungsformen summarisch in [1] zusammengefasst sind, ist weiterer Stand der Technik zu Wagenkästen insbesondere aus den Druckschriften FR 2692541 A1, FR 2704507 A1, GB 912635 A, US 5,765,485 A1, US 5,890,435 A1, DE 103 60 965 A1, DE 195 09 972 A1, DE 197 49 519 A1, EP 0 622 285 B1, EP 0 838 384 A1 und US 2002/0024235 A1 bekannt.

DE 100 53 125 A1 beschreibt als Stand der Technik den Übergang von geschweißten Schienenfahrzeugen mit geringem Vorfertigungsgrad zu einer Modulbauweise mit Längsmodulen unter Einsatz eines Untergestellmoduls, Seitenwandmodulen, Dachmodulen, Kopfmodulen und Kuppelendmodulen, die separat als Schweißbaugruppe oder kaltgefügte Baugruppen vorgefertigt werden und später miteinander verschweißt, vernietet oder in sonstigen Kaltfügetechniken zu einem Wagenkasten verbunden werden. Die Druckschrift schlägt die Fertigung von Wagenkästen mit Quermodulen vor, nämlich einem Kopfmodul, einem Fahrwerksmodul, einem Antriebsmodul, einem Fahrgast-Sitzbereichsmodul, einem Einstiegsbereichsmodul, einem Gelenk- oder Kupplungsbereichsmodul und einem Wagenendmodul vor. Die einzelnen Module sind vorgeplant und vorgefertigt und können notwendige Schnittstellen zur Aufnahme der jeweiligen Komponenten und Ausstattungsbaugruppen besitzen. Sämtliche Module sind jeweils mit endseitigen Ringspanten ausgestattet, welche über Längsträger miteinander verbunden sind. Für einen Türeinbau kommt eine vorinstallierte Tür zum Einsatz, die sich auf einem Hilfs- bzw. Adapterrahmen befindet und in einem offenen Seitenwandsegment des Moduls angeordnet ist. Speziell ausgestattete Zwischenmodule, welche ebenfalls mit Ringspanten und Längsträgern gebildet sind, können einen Übergang von einem Hochflurbereich zu einem Niederflurbereich ermöglichen. Die Zwischenmodule können mit Treppen, Trennwänden, Geländern etc. vorausgerüstet werden. Die vorgenannten Module werden zu einem Wagenkasten zusammengesetzt, indem diese mit Hilfe von Drahtseilen aufgereiht und miteinander verspannt werden. Die Längsträger der Module verfügen hier über Öffnungen, durch welche die Drahtseile hindurchgeführt sind, und Flansche. Ein seitlicher Formschluss kann mit Hilfe von formschlüssigen Elementen in den Ringspanten an den Enden der Module erreicht werden. Diese formschlüssigen Elemente können auch zur Positionierung der Module zueinander benutzt werden. An den Enden der zu verbindenden Wagenkastenmodule werden die Drahtseile befestigt und verspannt. Zusätzlich schlägt die Druckschrift vor, in Ringspanten Nuten vorzusehen, in die eine gummielastische, dauerelastische Dichtung oder eine pastöse Dichtmasse eingebracht werden kann.

Die nicht gattungsgemäße Druckschrift DE 697 14 465 T2 betrifft einen Omnibus, welcher mit einem Überrollbügel ausgestattet ist. Der Überrollbügel ist in Form eines auf dem Kopf stehenden "U" ausgebildet und an die freien Enden der beiden Vertikalschenkel des U mit dem Rahmen des Omnibusses verbunden. Der Überrollbügel ist aus einem Verbundwerkstoff hergestellt, der einen Kunststoff, vorzugsweise Epoxydharz oder Polyester, umfasst und glasfaserverstärkt ausgebildet sein kann. Der Überrollbügel soll zwecks Energieaufnahme elastisch deformierbar ausgebildet sein. Der Überrollbügel kann auch als Montagerahmen für eine Vorderseite des Busses dienen. Abschnitte der Vorderseite des Busses werden an dem Überrollbügel angebracht, bevor der Überrollbügel mit den daran angebrachten Abschnitten mit den anderen Abschnitten des Busses als eine vorgefertigte Einheit verbunden wird. Möglich ist, dass ein Dach des Omnibusses, ein Rahmen einer Windschutzscheibe, eine dreidimensional gekrümmte Vorderplatte, ein Abschnitt einer Seitenwand und ein Bodenabschnitt, der auch Stufen umfassen kann, am Überrollbügel befestigt werden, bevor die Verbindung des Überrollbügels mit dem Rahmen des Omnibusses erfolgt. Der Vorteil einer solchen Fertigung soll sein, dass die verschiedenen zu montierenden Komponenten in hohem Maße fertig gestellt werden können, bevor diese Abschnitte schwer zugänglich werden.

### AUFGABE DER ERFINDUNG

Der vorliegenden Erfindung liegt die Aufgabe zugrunde, einen Wagenkasten in modularer Bauweise vorzuschlagen, welcher insbesondere hinsichtlich
- des Gewichts,
- des Fertigungsaufwands,
- der Trageigenschaften,
- der Vielfalt der Gestaltungsmöglichkeiten und/oder
- der Montage- und Wartungsmöglichkeiten
verbessert ist.

### LÖSUNG

Die Aufgabe der Erfindung wird gelöst mit einem Wagenkasten mit den Merkmalen des unabhängigen Patentanspruchs 1. Weitere Ausgestaltungen eines erfindungsgemäßen Wagenkastens ergeben sich gemäß den abhängigen Patentansprüchen 2 bis 16.

### BESCHREIBUNG DER ERFINDUNG

Der erfindungsgemäße Wagenkasten findet Einsatz für ein Schienenfahrzeug, welches der Personenbeförderung (nicht dem Transport von Gütern) dient. Vorzugsweise handelt es sich um ein Hochgeschwindigkeits-Schienenfahrzeug. Der Wagenkasten gemäß der Erfindung ist mit mehreren Wagenkastenmodulen gebildet, welche für sich genommen in Umfangsrichtung um eine Längsachse des Schienenfahrzeugs geschlossen sind. In der zuvor eingeführten Nomenklatur handelt es sich somit um "Quermodule" mit einer Trennebene des Wagenkastens in die Wagenkastenmodule quer zur Längsachse des Schienenfahrzeugs. Hierbei können mehrere derartige Wagenkastenmodule, die in einem Wagenkasten Einsatz finden, gleich oder unterschiedlich ausgebildet sein, bspw. hinsichtlich ihrer Ausstattung, des Wandaufbaus, der Längserstreckung, des Querschnitts oder der sonstigen Geometrie. In einem Wagenkasten sind derartige Wagenkastenmodule in Längsrichtung hintereinander liegend angeordnet.

Während zu erwarten wäre, dass benachbarte Wagenkastenmodule unmittelbar aneinander befestigt werden, schlägt die Erfindung erstmals vor, dass zwischen benachbarten Wagenkastenmodulen Kopplungsmodule angeordnet sind. Die Kopplungsmodule sind ebenfalls in Umfangsrichtung geschlossen ausgebildet, wobei diese ringartig, also mit einer begrenzten Längserstreckung (bspw. weniger als 40 cm, 30 cm, 20 cm oder sogar 15 cm), ausgebildet sind. Eine Verbindung der benachbarten Wagenkastenmodule miteinander erfolgt über diese Kopplungsmodule. Eine derartige Ausgestaltung hat insbesondere die folgenden Vorteile:
- Sind Wagenkastenmodule unmittelbar miteinander gekoppelt, so wäre im Bereich der Stirnseiten der Wagenkastenmodule eine flanschartige Verbindung vorzusehen, die vorzugsweise mit einem umlaufenden Profil gebildet sein müssten. Die Kopplung von zwei benachbarten Wagenkastenmodulen erfordert somit den Einsatz eines Paares derartiger Flansche oder Profile mit einem derartigen Profil in jedem Wagenkastenmodul. Im Gegensatz hierzu kann erfindungsgemäß lediglich ein einziges ringartiges Kopplungsmodul, beispielsweise ein Strangprofil oder ein Spant, eingesetzt werden, welcher dann mit den Wagenkastenmodulen verbunden werden kann, indem das Kopplungsmodul flächig an einer Stirnseite des Wagenkastenmoduls anliegt. Hierdurch kann der Aufwand verringert werden und letztendlich das Gewicht der Wagenkastenmodule selbst sowie das Gewicht des mit den Kopplungsmodulen und den Wagenkastenmodulen gebildeten Wagenkastens reduziert werden.
- Soll ein spezifisches Wagenkastenmodul mit unterschiedlichen benachbarten Wagenkastenmodulen gekoppelt werden, könnte dies ohne Einsatz der erfindungsgemäßen Lösung erfordern, dass das spezifische Wagenkastenmodul für die Kopplung mit den unterschiedlichen Wagenkastenmodulen insbesondere im Bereich der Stirnseiten unterschiedlich ausgebildet werden kann. Damit müssten ansonsten baugleiche Wagenkastenmodule mit unterschiedlichen Kopplungselementen im Bereich der Stirnseiten der Wagenkastenmodule gefertigt werden und bereitgehalten werden, wodurch der Fertigungsaufwand und der logistische Aufwand signifikant ansteigen. Alternativ könnten ohne Einsatz des erfindungsgemäßen Kopplungsmoduls in dem spezifischen Wagenkastenmodul unterschiedliche Anschlussbereiche vorgesehen werden, die eine Kopplung mit den unterschiedlichen benachbarten Wagenkastenmodulen ermöglichen. Damit besitzen aber die Wagenkastenmodule eine Anzahl von Kopplungselementen, die ein Vielfaches der Zahl der an sich eigentlich für die Kopplung mit einem benachbarten Wagenkastenmodul genutzten Kopplungselemente ist. Dies würde zwar den logistische Aufwand reduzieren, stellt aber auch eine Erhöhung des Fertigungsaufwandes dar. Zusätzlich kann die Vorgabe zusätzlicher Kopplungsmöglichkeiten wie bspw. Bohrungen für unterschiedliche benachbarte Wagenkastenmodule zu einer unerwünschten Schwächung der Wagenkastenmodule führen. Hingegen ist es für die erfindungsgemäße Ausgestaltung möglich, dass das zwischen benachbarte Wagenkastenmodule zwischengeschaltete Kopplungsmodul die Kopplung eines spezifischen Wagenkastenmoduls mit unterschiedlichen benachbarten Wagenkastenmodulen ermöglicht. Beispielsweise können hier Ausnehmungen für unterschiedliche Befestigungselemente vorgesehen sein, von denen dann die jeweils einschlägigen Ausnehmungen für die Kopplung mit den unterschiedlichen Wagenkastenmodulen genutzt werden können. Ebenfalls möglich ist, dass erfindungsgemäß für die Kopplung des spezifischen Wagenkastenmoduls mit unterschiedlichen benachbarten Wagenkastenmodulen unterschiedliche Kopplungsmodule eingesetzt werden, die jeweils an die vorliegende Kombination angepasst sind. Dies hat zur Folge, dass die Wagenkastenmodule selber nicht oder in verringertem Ausmaß an die unterschiedlichen Kombinationsmöglichkeiten angepasst werden müssen, wodurch sich eine Verringerung der Bauteilvielfalt und des Fertigungsaufwandes ergibt. Den unterschiedlichen Kombinationsmöglichkeiten wird vielmehr durch die Anpassung der Kopplungsmodule Rechnung getragen. Auch für den Fall, dass mehrere unterschiedliche Kopplungsmodule für eine Kopplung mit unterschiedlichen Wagenkastenmodulen Einsatz finden sollten, ist hierdurch der logistische Aufwand reduziert, da die Bevorratung von mehreren Kopplungsmodulen weniger Bevorratungsvolumen erfordert als die Bevorratung einer Vielzahl an sich gleicher Wagenkastenmodule mit unterschiedlichen von diesen selbst ausgebildeten Kopplungselementen für die Kopplung mit benachbarten unterschiedlichen Wagenkastenmodulen.
- Das Kopplungsmodul kann nicht nur die mechanische Verbindung zwischen den benachbarten Wagenkastenmodulen herstellen. Vielmehr kann dieses ergänzende Funktionen ausführen. Um lediglich einige Beispiele zu nennen, kann das Kopplungsmodul der Abdichtung des Innenraumes gegenüber der Umgebung besondere Rechnung tragen, indem beispielsweise geeignete Dichtflächen, Labyrinthspalte und ähnliches zwischen Kopplungsmodul und Wagenkastenmodul ausgebildet werden. Ebenfalls möglich ist, dass das Kopplungsmodul Kanäle zwischen benachbarten Wagenkastenmodulen in Längsrichtung fortsetzt, beispielsweise für eine Heizung, Lüftung, Aufnahme von elektrischen Kabeln und ähnliches. Möglich ist aber auch, dass in dem Kopplungsmodul nicht eine Fortsetzung derartiger Leitungen, Kanäle (allein) in Richtung der Längsachse erfolgt. Vielmehr kann auch eine Fortsetzung dieser Kanäle oder Leitungen in Umfangsrichtung erfolgen, so dass ein Kanal oder eine Leitung von einem Umfangsbereich in einem Wagenkastenmodul über das Kopplungsmodul einem anderen Umfangsbereich zugeführt werden kann, was beispielsweise erforderlich sein kann, wenn über das Kopplungsmodul Wagenkastenmodule unterschiedlicher Bauart miteinander gekoppelt werden sollen.
- Weiterhin kann im Bereich der ringartigen, unter Umständen gegenüber den Wagenkastenmodulen mit einer höheren Steifigkeit ausgestatteten Kopplungsmodulen eine Abstützung von besonderen Bauelementen, wie beispielsweise Türelementen, Aktuatoren und ähnlichem erfolgen.

Es versteht sich, dass die vorgenannten Vorteile alternativ oder kumulativ für die erfindungsgemäße Ausgestaltung zum Einsatz kommen, wobei die Erfindung lediglich durch die in den Patentansprüchen genannten Merkmale eingeschränkt ist, nicht jedoch zwingend an das Vorliegen mindestens eines der oben angeführten Vorteile gebunden ist.

Üblicherweise findet gemäß dem Stand der Technik zusätzlich zu Wagenkastenmodulen, welche beispielsweise einen Fahrgastraum begrenzen, eine Tragstruktur Einsatz, welche sich weitestgehend über den gesamten Wagenkasten erstreckt und welche zwischen die Achsen oder Drehgestelle und den Fahrgastraum zwischengeordnet ist. Diese Tragstruktur, insbesondere Längsträger, nehmen die wesentlichen, im Betrieb des Wagenkastens wirkenden statischen und dynamischen Kräfte auf. Die vorliegende Erfindung geht hier einen anderen Weg: erfindungsgemäß sind die Wagenkastenmodule selbsttragend ausgebildet, wobei kein gemeinsames, sich über mehrere Wagenkastenmodule erstreckendes Tragelement vorgesehen ist, also sämtliche Tragelemente an den Wagenkastenmodulen selbst enden. Damit erfolgt die Übertragung von Kräften zwischen benachbarten Wagenkastenmodulen nicht zumindest teilweise über sich über den gesamten Wagenkasten erstreckende Tragelemente. Vielmehr erfolgt die Übertragung der Kräfte zwischen den benachbarten Wagenkastenmodulen (ausschließlich oder weitestgehend) über die Kopplungsmodule. Hierbei hat sich gezeigt, dass die Übertragung der Kräfte über die Kopplungsmodule vorteilhaft ist, da die Kopplungsmodule auch eine Kraftübertragung von Kräften abseits einer Längsachse des Wagenkastens ermöglichen, so dass auch Kräftepaare zwischen den Kopplungsmodulen übertragen werden können, welche Biegemomente übertragen und abstützen können.

In weiterer Ausgestaltung der Erfindung sind die Kopplungsmodule als Spanten ausgebildet, wobei die Spanten vorzugsweise als ein Tragprofil ausgebildet sind, welches auch ein Stranggussprofil sein kann. Hierbei kann ein Kopplungsmodul bereits ringartig einstückig hergestellt sein. Möglich ist auch, dass ein Spant oder ein Stranggussprofil mehrteilig ausgebildet ist mit Teilelementen gleichen oder unterschiedlichen Querschnitts und/oder Materials. Die einzelnen Teilelemente können beliebig fest miteinander verbunden sein, beispielsweise über ein Verschweißen, Verschrauben oder ähnliches. Hierbei können die Teilelemente vor deren Verbindung verformt worden sein, um die ringartige Struktur herzustellen. Derart gebildete Kopplungsmodule zeichnen sich durch eine einfache und kostengünstige Herstellung, aber hinreichende mechanische Trageigenschaften aus. Andererseits kann durch Wahl des eingesetzten Profils des Spants oder des Stranggussprofils bereits den oben erläuterten Funktionen Rechnung getragen werden. Beispielsweise können Stirnseiten, Gegenflächen oder Flansche ausgebildet werden, über welche dann eine Verbindung mit den Wagenkastenmodulen auf beiden Seiten des Kopplungsmoduls erfolgen kann. Ebenfalls können in den Spanten oder Stranggussprofilen Ausnehmungen, Bohrungen oder ähnliches gebildet sein, im Bereich welcher Kanäle oder Leitungen durch das Kopplungsmodul hindurchgeführt sind von einem Wagenkastenmodul zu dem nächsten Wagenkastenmodul. Besitzt der Spant oder das Stranggussprofil einen Querschnitt mit Hohlräumen, Hinterschneidungen, Kanälen oder Ausnehmungen, können die diese genutzt werden, um auch Kanäle in Umfangsrichtung des Kopplungsmoduls zu bilden. Möglich ist auch, dass die Kopplungsmodule, Spanten oder Stranggussprofile hiermit verbundene, insbesondere elektrische oder fluidische, Schnittstellen besitzen, die automatisiert mit der Verbindung des Kopplungsmoduls mit einem Wagenkastenmodul in Wirkverbindung treten mit Gegen-Schnittstellen der Wagenkastenmodule, um eine elektrische Verbindung oder eine fluidische Verbindung zu schaffen.

Von Bedeutung ist insbesondere für Wagenkästen für Hochgeschwindigkeits-Schienenfahrzeuge, dass sich auch im Übergangsbereich zwischen benachbarten Wagenkastenmodulen eine ebene Außenfläche ergibt. Dieser Anforderung kann mit zusätzlichen Maßnahmen, beispielsweise einer Befüllung sich ergebender Fugen, einer ergänzenden äußeren Abdeckung und ähnlichem Rechnung getragen werden. Für einen besonderen Vorschlag der Erfindung verfügen allerdings die Wagenkastenmodule einerseits über Stirnflächen, welche in Richtung der Längsachse an Gegenflächen der Kopplungsmodule oder Spanten abgestützt sind. Darüber hinaus sind außen liegend von den Stirnflächen angeordnete, unter Umständen umlaufende Fortsätze oder Abdeckungen an den Wagenkastenmodulen vorgesehen, die die Spanten und Kopplungsmodule von außen (zumindest teilweise) abdecken. Im Idealfall stoßen die Fortsätze oder Abdeckungen benachbarter Wagenkastenmodule mit ihren Stirnseiten aneinander oder bilden lediglich einen geringfügigen Spalt zueinander aus, so dass über die Fortsätze oder Abdeckungen die Kopplungsmodule nach außen abgedeckt sind und sich eine - bis auf einen unter Umständen geringfügigen verbleibenden Spalt - eine bündige Außenfläche der benachbarten Wagenkastenmodule ergibt. Möglich ist, dass ein verbleibender Spalt durch zusätzliche Dicht- oder Füllelemente geschlossen ist.

Während durchaus möglich ist, dass die Verbindung benachbarter Wagenkastenmodule über die Kopplungsmodule unter Einsatz nicht lösbarer Verbindungsverfahren, beispielsweise ein Kleben, Schweißen, Nieten oder ähnliches erfolgt, schlägt die Erfindung in weiterer Ausgestaltung vor, dass die Wagenkastenmodule lösbar mit den Kopplungsmodulen oder Spanten verbunden sind. Dies hat den Vorteil, dass zu einem späteren Zeitpunkt, beispielsweise zu Wartungszwecken, Wagenkastenmodule wieder voneinander und von den Kopplungsmodulen gelöst werden, so dass auch ein Teilaustausch defekter Wagenkastenmodule möglich ist. Ebenfalls denkbar ist, dass die äußere Geometrie oder Ausstattung eines einmal hergestellten und unter Umständen zeitweise genutzten Wagenkastens durch Austausch einzelner Wagenkastenmodule im Nachhinein verändert wird. Dazu kann es zweckdienlich sein, dass die einzelnen Wagenkastenmodule jeweils für sich geschlossene Sektionen mit jeweils zwei in den Endbereichen angeordneten zwei Spanten ausgebildet sind, die dann mit dem Kopplungsmodul verbunden sind. Dies kann vorteilhaft sein für eine Vormontage inklusive der Innenausstattung. Ebenfalls möglich ist, dass ein Kopplungsmodul mit mehreren axial hintereinander liegenden Strangprofilen gebildet ist. Zumindest zwischen einzelnen Wagenkastenmodulen kann das Kopplungsmodul entfallen, so dass dann Spanten benachbarter Wagenkastenmodule ohne Zwischenschaltung eines Kopplungsmoduls miteinander verbunden sind.

In weiterer Ausgestaltung der Erfindung besitzen die Wagenkastenmodule im Bereich ihrer Stirnseiten mindestens einen Anschluss, beispielsweise für eine elektrische Verbindung und/oder eine fluidische Verbindung. Unter Umständen kann es sich um einen multifunktionalen Anschluss für eine Vielzahl von derartigen Verbindungen handeln. Hierbei kann der Anschluss fest mit dem Wagenkastenmodul verbunden sein, in dieses eingesetzt sein, oder eine mono- oder multifunktionale, u. U. flexible Leitung kann im Bereich der Stirnseite eines Wagenkastenmoduls aus diesem heraustreten. Der vorgenannte Anschluss ist erfindungsgemäß über ein von einem Spant oder Kopplungsmodul gebildetes oder getragenes Verbindungselement mit mindestens einem entsprechenden Anschluss eines benachbarten Wagenkastenmoduls verbunden. Für den Fall erhöhter Anforderungen ist es sogar denkbar, dass, beispielsweise für den Fall elektrischer Anschlüsse, das von dem Spant oder Kopplungsmodul gebildete oder getragene Verbindungselement eine CPU besitzt, über welche eine Verarbeitung der von den Anschlüssen übertragenen Signale erfolgen kann und der Signalaustausch zwischen benachbarten Wagenkastenmodulen gesteuert oder geregelt werden kann.

Während durchaus denkbar ist, dass die Verbindung zwischen den Wagenkastenmodulen über die Kopplungsmodule zunächst zu einem Rohbau des Wagenkastens erfolgt mit anschließenden Bearbeitungsvorgängen, beispielsweise der Erzeugung einer inneren Auskleidung des Wagenkastens und der Vervollständigung der Innenausstattung sowie der Einbringung von Kabel- und Leitungssträngen, schlägt eine weitere Ausgestaltungsform der Erfindung vor, dass mindestens eines der Wagenkastenmodule bereits vor der Montage desselben mit einem Kopplungsmodul bereits mit einer Innenausstattung, insbesondere einer Verkleidung, Bestuhlung, Tischen und/oder Ablageflächen wie Regalen und ähnlichem, versehen ist. Im Extremfall kann somit das Wagenkastenmodul vollständig vorgefertigt sein, so dass dieses nach der Verbindung der benachbarten Wagenkastenmodule über das Kopplungsmodul zum vollständigen Wagenkasten, zumindest hinsichtlich der Innenausstattung, betriebsbereit ist. Alternativ oder kumulativ kann das Wagenkastenmodul bereits die elektrischen Installationen beinhalten.

In weiterer Ausgestaltung ist zwischen benachbarte Wagenkastenmodule und den zugeordneten Spant oder das zugeordnete Kopplungsmodul ein Dichtmaterial zwischengeschaltet. Hierbei kann es sich beispielsweise um einen sich in Umfangsrichtung erstreckenden festen, elastischen Dichtkörper handeln, welcher mit der Herstellung der Verbindung zwischen einem Wagenkastenmodul und dem Kopplungsmodul elastisch zwischen diesen beiden Modulen verspannt wird unter Erzeugung einer Dichtwirkung. Ebenfalls möglich ist, dass ein Füll- oder Dichtmaterial zwischen das Kopplungsmodul und das Wagenkastenmodul zwecks Abdichtung eingespritzt wird.

Für einen weiteren erfindungsgemäßen Wagenkasten ist ein Wagenkastenmodul selbst wiederum mit mehreren Modulelementen gebildet, die miteinander verbunden sind. Hierbei können, nach der eingangs erläuterten Nomenklatur "längsgeteilte" Modulelemente eingesetzt werden, die also in Umfangsrichtung nebeneinander liegend angeordnet sind. Beispielsweise erfolgt eine Verbindung der Modulelemente zu einem Wagenkastenmodul durch ein Verschweißen, Verschrauben, Fügen, formschlüssiges Verbinden, kraftschlüssiges Verbinden, Verkleben oder ähnliches.

In weiterer Ausgestaltung dieses Gedankens ist ein Modulelement als ein Flächenelement ausgebildet, welches somit sowohl Trageigenschaften besitzt als auch eine schalenartige Verkleidung ausbildet und somit multifunktional ist. Hierbei kann das Flächenelement mit einem Faserverbund, insbesondere einem Faserkunststoffverbund, gebildet sein. Ebenfalls möglich ist, dass für das Flächenelement eine Sandwichbauweise Einsatz findet, bei welcher zwischen tragenden Deckschichten die Deckschichten verbindende Tragstrukturen oder Stringer angeordnet sind mit zwischen den Tragstrukturen liegenden Hohlräumen, mit Honigwaben-Strukturen, ausgefüllten Hohlräumen, im Inneren gebildeten Kanälen oder hindurchgeführten Leitungen oder ähnlichem.

Weiterhin schlägt die Erfindung vor, dass in dem Faserverbund Einsätze angeordnet sind, deren Form, Material und Einbindung an den Faserverbund derart ausgewählt ist, dass diese zur Aufnahme oder Abstützung eines Verbindungsbolzens oder einer Befestigungsschraube dienen. Somit kann über diese Einsätze die Verbindung benachbarter Flächenelemente hergestellt werden und/oder eine Verbindung der Flächenelemente mit dem Kopplungsmodul erfolgen.

Erstreckt sich in einem Modulelement oder Flächenelement ein Stringer oder ein Tragprofil, kann es von Vorteil sein, wenn eine im Querschnitt randgeschlossene oder randoffene Ausnehmung dieses Tragprofils in die Stirnseite des Modulelements einmündet. In diese nach außen geöffnete Ausnehmung des Modulelements kann dann ein Einsatz eintreten, der an dem Tragprofil befestigt wird und an welchem sich dann ein Verbindungsbolzen abstützt. Der Einsatz und dessen Anbindung an das Tragprofil gewährleistet eine gute Abstützung des Verbindungsbolzens und die Kraftverteilung in dem Modulelement, wodurch letztendlich eine dauerfeste und steife Verbindung ermöglicht ist.

Eine weitere Ausgestaltung der Erfindung widmet besondere Aufmerksamkeit der Ausbildung von Fenstern für einen derartigen Wagenkasten. Während durchaus möglich ist, dass eine Fensterscheibe unmittelbar zwischen an benachbarten Modulelemente oder Flächenelementen abgestützt ist, schlägt eine Weiterbildung der Erfindung vor, dass ein Modulelement mit einer rahmen- oder fachwerkartigen Tragstruktur gebildet ist, an welcher innen liegend und/oder außen liegend eine durchsichtige Fensterscheibe abgestützt ist. Die Nutzung der rahmen- oder fachwerkartigen Tragstruktur wirkt ansonsten im Bereich der Fenster entstehenden mechanischen Schwächungen entgegen, wobei die Tagstruktur auch gesondert ausgebildet sein kann, um besonderen im Bereich der Fenster auftretenden mehrachsigen Spannungszuständen Rechnung tragen zu können.

Möglich ist weiterhin im Rahmen der vorliegenden Erfindung, dass der erfindungsgemäße Wagenkasten mit zwei endseitigen Endmodulen ausgebildet ist. Diese Endmodule können besonders den im Bereich der Endseiten des Wagenkastens bestehenden Anforderungen angepasst werden. Beispielsweise können diese eine besondere aerodynamische Formgebung besitzen, einen Übertrittsbereich für einen benachbarten Wagenkasten besitzen sowie an die erforderliche Kopplung mit einem benachbarten Wagenkasten oder einer Lokomotive besitzen. Ebenfalls möglich ist, dass das Endmodul einen geeigneten Anbindungsbereich im Bereich der Unterseite für einen Radsatz oder ein Drehgestell beliebiger Bauart besitzt. Weiterhin besitzt für die Ausführungsform der Wagenkasten zwei jeweils an ein Endmodul anschließende Einstiegsmodule, welche geeignet mit Türen, Treppen und Einstiegshilfen ausgestattet sein können. Schließlich ist mindestens ein Fahrgastraummodul zwischen den beiden Einstiegsmodulen eines Wagenkastens angeordnet, welches den eigentlichen Innenraum des Wagenkastens ausbildet, in welchem sich der Fahrgast während der Fahrt des Schienenfahrzeuges aufhält und der mit der Innenausstattung ausgestattet ist. Es versteht sich, dass weitere Wagenkastenmodule ergänzend zu den genannten Modulen in einem Wagenkasten vorgesehen sein können, wobei diese unterschiedlichen Zwecken dienen können und/oder unterschiedliche Formgebungen oder Längen besitzen können.

Für eine alternative Ausgestaltung ist der Wagenkasten mit zwei endseitigen Endmodulen gebildet. An die beiden Endmodule schließen Achsmodule an, welche somit unmittelbar die Achsen oder Drehgestelle tragen. Diese Achsmodule können ergänzend (oder alternativ) als Einstiegsmodul und/oder Antriebsmodul ausgebildet sein, wobei auch ein Klimaaggregat in dieses Achsmodul integriert sein kann. Zwischen den beiden Achsmodulen ist dann ein einziges Fahrgastraummodul angeordnet, welche vorzugsweise um den Faktor 3, 4 oder 5 bis 8 länger ausgebildet ist als die Endmodule und die Achsmodule. Von Vorteil kann hierbei sein, wenn der Wagenkasten angesichts des sich über die Mitte erstreckenden Fahrgastraummoduls nicht mittig geteilt ist, sondern lediglich in den außenliegenden Randbereichen, da mittig zwischen den Achsmodulen u. U. eine Beanspruchung oder ein Biegemoment am größten ist, was gegen eine Trennung des Wagenkastens in diesem Bereich in zwei Module spricht.

Durchaus möglich ist, dass der Wagenkasten einstöckig ausgebildet ist, wobei in diesem Fall die Wagenkastenmodule und Kopplungsmodule vorzugsweise mit einer einzigen durchgehenden Ausnehmung ausgebildet sind, wobei ebenfalls denkbar ist, dass mehrere derartige durchgehende Ausnehmungen ausgebildet sind, beispielsweise mit einer zusätzlichen Ausnehmung unterhalb des Boden, die zur Ausbildung von Kanälen und/oder Führung von Leitungen oder Aufnahme zusätzlicher Bauelemente dienen kann. In bevorzugter Ausgestaltung ist aber der Wagenkasten zweistöckig ausgebildet. In diesem Fall bilden das Wagenkastenmodul und/oder das Kopplungsmodul eine obere, durchgehende Ausnehmung sowie eine untere durchgehende Ausnehmung aus. Die beiden genannten Ausnehmungen sind durch ein Querelement voneinander getrennt. Das Querelement kann beispielsweise zur Bildung oder Abstützung eines Deckenbereiches für den durch die untere durchgehende Ausnehmung gebildeten unteren Stock sowie eines Bodenelementes für den durch die obere durchgehende Ausnehmung gebildeten oberen Stock dienen. Als weitere Funktion kann das genannte Querelement dazu dienen, das in Umfangsrichtung geschlossene Wagenkastenmodul und/oder Kopplungsmodul zu versteifen, indem das Querelement gegenüberliegende Seiten der Module verbindet. Ebenfalls möglich ist, dass das Querelement mit davon getragenen Boden- und/oder Deckelementen einen Fahrgastraum von einem anderweitig genutzten Raum trennt, beispielsweise einem unter dem Boden angeordneten Tunnel oder einer Kammer für Kanäle, Leitungen, Aggregate u. ä..

In weiterer Ausgestaltung besitzt lediglich das Kopplungsmodul das zuvor erläuterte Querelement, welches die beiden Ausnehmungen für die doppelstöckige Ausbildung voneinander trennt. Die Erfindung schlägt hier vor, dass Bodenpaneele und/oder Deckenpaneele an dem Querelement des Kopplungsmoduls abgestützt sind, ggf. auch im äußeren Randbereich der Wagenkastenmodule. Somit sind die Boden- oder Deckenpaneele zwischen den Kopplungsmodulen und den äußeren ringförmigen Begrenzungen des Wagenkastenmoduls "freitragend" ohne Abstützung an einem Querelement des Wagenkastenmoduls ausgebildet. Bei hinreichender eigensteifer Ausbildung der Boden- und Deckenpaneele für eine derartige freitragende Abstützung kann eine signifikante Reduzierung der Masse erzielt werden, wobei die Querelemente der Kopplungsmodule geeignet für die erforderliche Tragfunktion ausgestaltet werden können.

In weiterer Ausgestaltung der Erfindung ist zumindest ein Wagenkastenmodul als Achsmodul ausgebildet, an welchem unmittelbar ein Drehgestell oder ein Fahrwerk abgestützt ist. Für diese Ausgestaltung kann also auf die Zwischenschaltung eines zusätzlichen Trägers für das Drehgestell oder das Fahrwerk verzichtet werden. Etwaige vom Fahrwerk oder Drehgestell in das Achsmodul eingeleitete Kräfte werden erfindungsgemäß von dem Achsmodul zu einem benachbarten Wagenkastenmodul über die Kopplungselemente übertragen.

In alternativer Ausgestaltung der Erfindung ist ein Endmodul auf einem zwei benachbarte Wagenkästen abstützenden Drehgestell abgestützt. Bei einem derartigen zwei benachbarte Wagenkästen abstützenden Drehgestell handelt es sich insbesondere um ein so genanntes Jakobs-Drehgestell. Derartige Drehgestelle sind insbesondere von Vorteil hinsichtlich der Fahrdynamik, führen zu einer erhöhten Laufruhe und erhöhen u. U. die Sicherheit des Wagenkastens gegenüber einem Entgleisen.

In weiterer Ausgestaltung der erfindungsgemäßen Wagenkastenmodule können in diesen Längsträger eingesetzt sein, welche im einfachsten Fall an den Kopplungsmodulen endseitig befestigt sind. Ebenfalls möglich ist allerdings, dass das Wagenkastenmodul im Bereich der Seitenwandungen ohnehin über Tragstrukturen verfügt, welche dann multifunktional verwendet werden können, indem diese beispielsweise einerseits ein Fenster begrenzen und andererseits als Längsträger das Wagenkastenmodul versteifen und endseitig an die Kopplungsmodule angebunden sind. Erstreckt sich eine derartige Tragstruktur oder ein mittragendes Fensterband nur über einen Teil der Längserstreckung des Wagenkastenmoduls, kann ein Längsträger zwischen das Kopplungsmodul und die Tragstruktur oder das Fensterband zwischengeordnet sein und jeweils endseitig an das Kopplungsmodul und die Tragstruktur oder das mittragende Fensterband angebunden sein. Möglich ist, dass die Längsträger oder anderweitig versteifende Tragelemente im Bodenbereich des Wagenkastenmoduls angeordnet sind. Durchaus möglich ist allerdings auch, dass der Längsträger oder ein zusätzlicher Längsträger an beliebiger Position entlang des Umfangs des Wagenkastenmoduls in einem Querschnitt desselben angeordnet ist. Während üblicherweise versucht wird, einen (durchgehenden) Längsträger des Wagenkastens vorzugsweise in der Ebene anzuordnen, in welcher Kopplungskräfte zwischen benachbarten Wagenkästen erzeugt und übertragen werden, um auf den Längsträger wirkende Biegemomente möglichst klein zu halten, kann durch die erfindungsgemäße Ausgestaltung mit der Übertragung von Kräften und Biegemomenten zwischen den Kopplungsmodulen u. U. auch eine Anordnung von geteilten Längsträgern, Tragstrukturen und Fensterbändern abseits der zuvor genannten Ebene erfolgen. Für eine Aufnahme größerer wirkender Biegemomente, welche problemlos über die flächige Anlage der Kopplungsmodule übertragen werden können, finden vorzugsweise mehrere beabstandet von der vorgenannten Ebene angeordnete Längsträger zur Übertragung von Kräftepaaren Einsatz.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Wagenkasten gemäß dem Stand der Technik in einer räumlichen Explosionsdarstellung.
- **Fig. 2**: zeigt ein räumliches Detail eines Wagenkastens gemäß dem Stand der Technik in Differentialbauweise.
- **Fig. 3**: zeigt ein räumliches Detail eines Wagenkastens gemäß dem Stand der Technik in Integralbauweise.
- **Fig. 4**: zeigt die Verbindung mehrerer in Umfangsrichtung benachbarter Tragprofile über Schweißnähte für einen Wagenkasten in Integralbauweise gemäß Fig. 3 in einem Teilquerschnitt.
- **Fig. 5**: zeigt einen erfindungsgemäßen Wagenkasten in einer räumlichen Ansicht.
- **Fig. 6**: zeigt mehrere Kopplungsmodule in einer räumlichen Anordnung, wie diese Einsatz finden kann zur Verbindung von Wagenkastenmodulen zu einem erfindungsgemäßen Wagenkasten.
- **Fig. 7**: zeigt ein Wagenkastenmodul, hier ein Endmodul, in räumlicher Ansicht.
- **Fig. 8**: zeigt ein weiteres Wagenkastenmodul, hier ein Einstiegsmodul, in räumlicher Ansicht.
- **Fig. 9**: zeigt ein weiteres Wagenkastenmodul, hier ein Fahrgastraummodul, in räumlicher Ansicht.
- **Fig. 10**: zeigt ein Wagenkastenmodul mit zwei zugeordneten Kopplungsmodulen in einer räumlichen Explosionsdarstellung.
- **Fig. 11**: zeigt in einer räumlichen Ansicht eine mit mehreren Bodenpaneelen gebildete Bodenplatte, die Einsatz finden kann in einem erfindungsgemäßen doppel- stöckigen Wagenkasten.
- **Fig. 12**: zeigt in einer räumlichen Detaildarstellung die Verbindung zwischen einem Kopplungsmodul und einem Wagenkastenmodul oder Modulelement desselben unter Verwendung eines in einer Ausnehmung des Wagenkastenmoduls oder Modulelements aufgenommenen Einsatzes.
- **Fig. 13**: zeigt in einer räumlichen Explosionsdarstellung einen Wagenkasten, welcher mit zwei Endmodulen, zwei Achsmodulen und einem mittigen Fahrgastraummodul gebildet ist.

### FIGURENBESCHREIBUNG

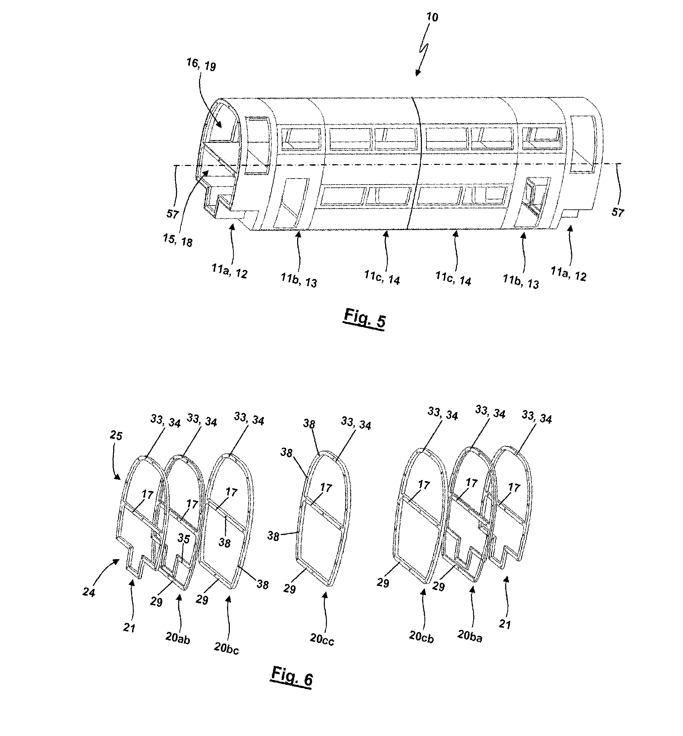

**Fig. 5** zeigt einen Wagenkasten 10, welcher mit mehreren in Richtung der Längsachse hintereinander liegenden Wagenkastenmodulen 11 gebildet ist. Für das dargestellte Ausführungsbeispiel handelt es sich bei dem Wagenkastenmodul 11a um ein Endmodul 12, bei dem Wagenkastenmodul 11b um ein Einstiegsmodul 13, während das Wagenkastenmodul 11c als Fahrgastraummodul 14 ausgebildet ist.

Die Wagenkastenmodule 11 verfügen jeweils über eine einzige durchgehende, in Richtung einer Längsachse 57 orientierte Ausnehmung 26, die in montiertem Zustand des Wagenkastens 10 durch eine Bodenplatte 48 aufgeteilt ist in zwei durchgehende Ausnehmungen 15, 16. In einer groben Näherung sind somit die Wagenkastenmodule 11 8-förmig ausgebildet. Die Ausnehmungen 15, 16 bilden Innenräume 18, 19 des Wagenkastens 10, die übereinander liegend angeordnet sind zur Bildung unterschiedlicher Stockwerke für die Fahrgäste in dem Wagenkasten 10.

Die Verbindung benachbarter Wagenkastenmodule 11 erfolgt über Kopplungsmodule 20. In **Fig. 6** sind die Kopplungsmodule mit Buchstaben ergänzt, welche kennzeichnen, welche Wagenkastenmodule 11 über das jeweilige Kopplungsmodul 20 miteinander verbunden werden. So ist beispielsweise das Kopplungsmodul 20ab eingesetzt zur Verbindung eines Wagenkastenmoduls 11a mit einem Wagenkastenmodul 11b. Darüber hinaus sind in den Endbereichen des Wagenkastenmoduls gemäß Fig. 5 Kopplungsmodule 21 vorgesehen, über die die Ausnehmungen 15, 16 des Wagenkastens 10 beispielsweise über eine stirnseitige Wandung, die an diesem Kopplungsmodul 21 befestigt wird, geschlossen werden können.

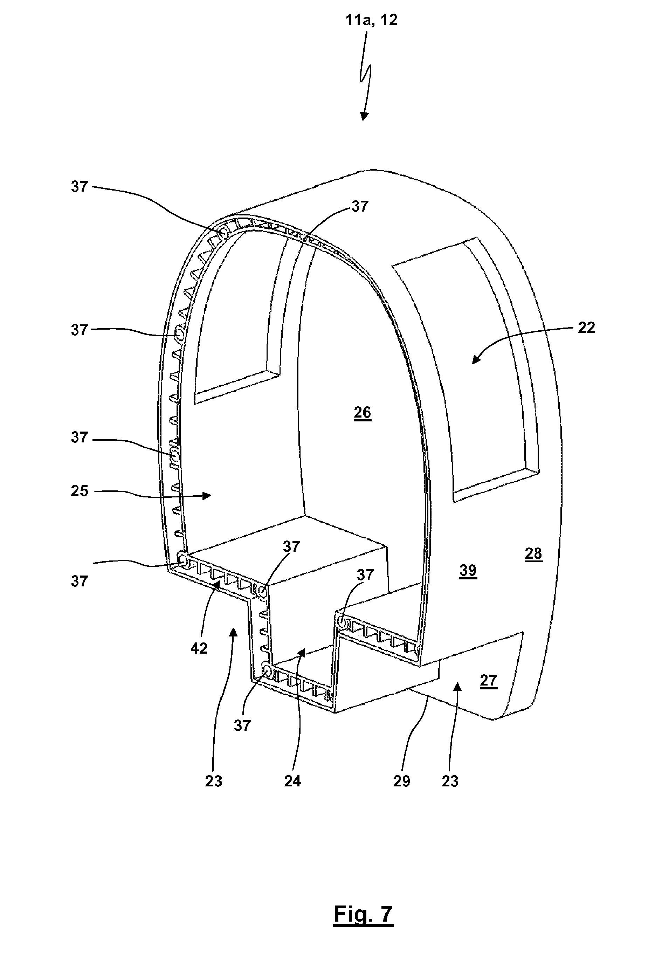

In **Fig. 7** ist das Endmodul 12 dargestellt, welches über einen Fensterbereich 22 verfügt. In einem Bodenbereich des Endmoduls 12 ist ein Anbindungsbereich 23 für ein Fahrwerk, insbesondere ein Drehgestell, ausgebildet. Das Endmodul 12 besitzt eine in erster Näherung pilzartige Querschnittskontur mit einem "Stengelbereich" 24 und einem Kopfbereich 25, wobei das Endmodul 12 mit einer ungefähr konstanten Wandstärke ausgebildet ist, so dass dieses die Ausnehmung 26 mit hier ebenfalls pilzartigem Querschnitt begrenzt. In dem dem Einstiegsmodul 13 zugewandten Endbereich geht der Querschnitt des Endmoduls 12 mit einer entsprechenden Erweiterung der Ausnehmung 26 über eine Stufe 27 zu einem Querschnitt über, in welchem der Querschnitt des Kopfbereichs 25 fortgesetzt ist, aber die Ausnehmung 26 vom Kopfbereich nach unten ohne Verjüngung nach innen zur Ausbildung des Stengelbereichs 24 fortgesetzt ist. Vielmehr setzt sich hier die Seitenwandung 28 ohne Knick mit leichter Krümmung fort bis zu einem Bodenbereich 29, welcher im eingebauten Zustand des Endmoduls 12 horizontal orientiert ist und geringfügig unterhalb des Stengelbereichs 24 angeordnet ist. Auch in dem dem Einstiegsmodul 13 zugewandten Endbereich ist das Endmodul 12 mit einer im Wesentlichen konstanten Wandstärke ausgebildet. Der Fensterbereich 22 erstreckt sich in der oberen Hälfte der Ausnehmung 26, so dass dieser in dem fertig montierten Wagenkasten 10 gemäß Fig. 5 im Bereich der oberen Ausnehmung 16 angeordnet ist.

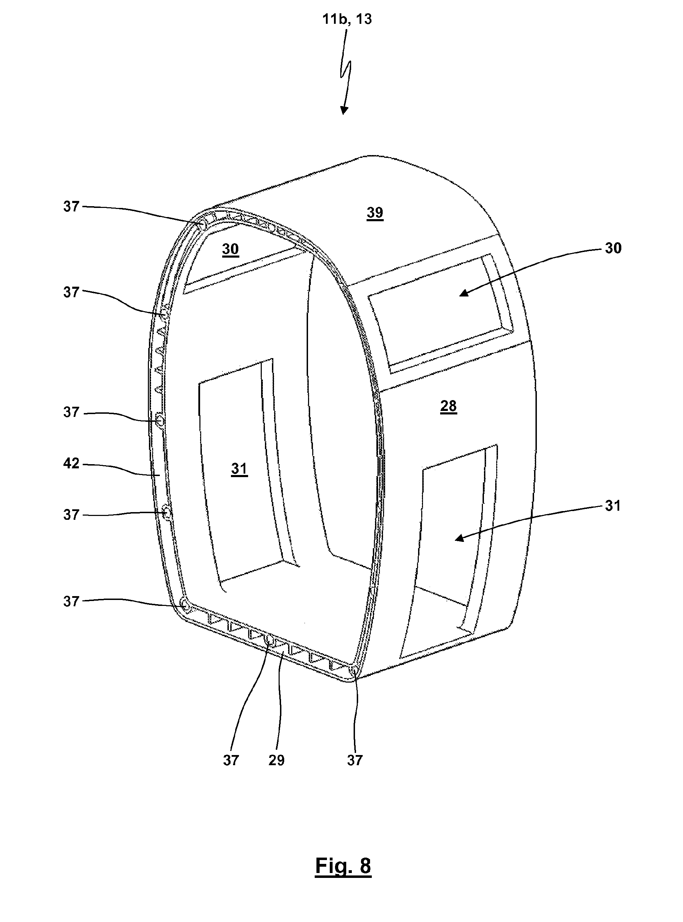

**Fig. 8** zeigt das Einstiegsmodul 13, welches im Gegensatz zu dem Endmodul 12 einen in Richtung der Längsachse im Wesentlichen konstanten Querschnitt besitzt. Allerdings sind in der Seitenwandung 28 des Einstiegsmoduls 13 Ausnehmungen vorgesehen zur Bildung von Fensterbereichen 30 sowie Türbereichen 31 auf gegenüberliegenden Seiten des Einstiegsmoduls 13. Der Querschnitt des Einstiegsmoduls 13 entspricht dem Querschnitt des Endmoduls 12 in dem im Einbauzustand zugewandten Endbereich. Dieser Querschnitt ist in erster Näherung als elliptisch oder eiförmig zu bezeichnen mit einer Abflachung im Bodenbereich 29.

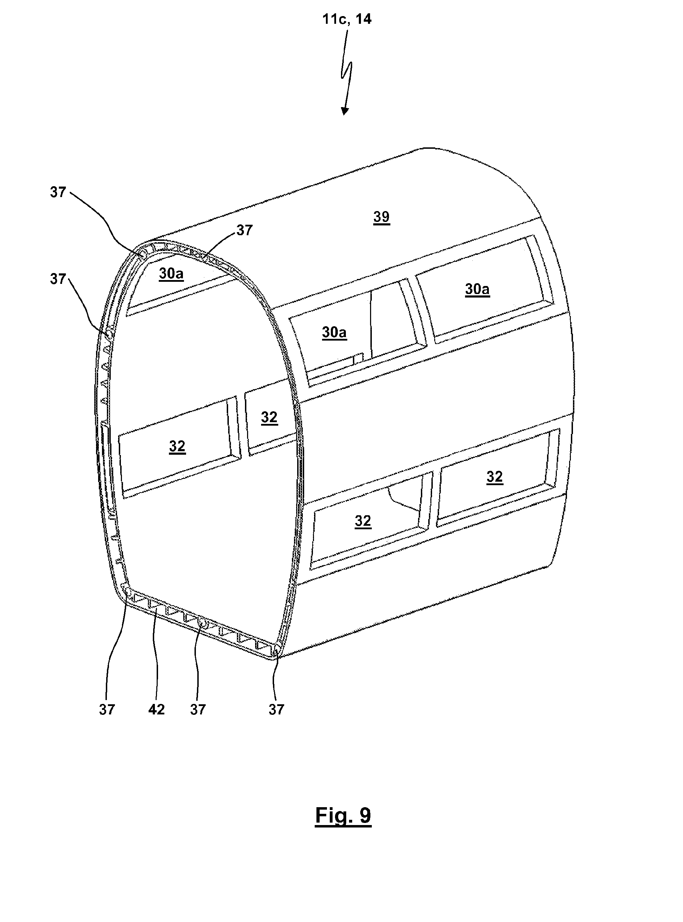

Wie in **Fig. 9** zu erkennen ist, besitzt auch das Fahrgastraummodul 14 einen korrespondierenden Querschnitt. Allerdings verfügt dieses Fahrgastraummodul 14 nicht über einen Türbereich 31. Stattdessen sind auf gegenüberliegenden Seiten jeweils zwei Fensterbereiche 30a vorgesehen mit gleicher Größe, Erstreckung und Anordnung in Umfangsrichtung wie die Fensterbereiche 30 gemäß Fig. 8. Zusätzlich verfügt das Fahrgastraummodul 14 im Bereich der unteren Ausnehmung 15 über weitere Fensterbereiche 32, deren Größe und axiale Anordnung in Richtung der Längsachse den Fensterbereichen 30 entspricht.

Die Kopplungsmodule 20, 21 sind jeweils ringartig mit einer äußeren Ringstruktur 33 ausgebildet, die beispielsweise aus einem Stranggussprofil bestehen und einen Spant 34 bilden. Ungefähr mittig sind gegenüberliegende Seiten der Ringstruktur 33 jeweils mit einem Querelement 17 miteinander verbunden, welches für den zusammengebauten Zustand die Höhe der Trennung der Ausnehmungen 15, 16 vorgibt. Im einfachsten Fall ist das Querelement 17 als geradlinige Strebe oder Spant ausgebildet. Die Kopplungsmodule 20bc, 20cc verfügen über eine Ringstruktur 33, welche entsprechend dem Querschnitt des Einstiegsmoduls 13 und des Fahrgastraummoduls 14 ausgebildet sind, also ungefähr eiförmig ausgebildet sind mit einer Abflachung im Bodenbereich 29. Das Querelement 17 ist parallel zu dem Bodenbereich 29 der Ringstruktur 33 angeordnet. Hingegen ist das Kopplungsmodul 21 entsprechend dem Querschnitt des Endmoduls 12 im außen liegenden Endbereich, also ungefähr pilzförmig ausgebildet, wobei der Kopfbereich 25 ungefähr mittig durch das Querelement 17 geteilt ist. Die Kopplungselemente 20ab besitzen zunächst eine Ringstruktur 33 mit Querelement 17 entsprechend den Kopplungsmodulen 20bc, 20cc. Zusätzlich besitzen die Kopplungsmodule 20ab eine ergänzende Querstrebe 35, die bei Orientierung parallel zum Querelement 17 ebenfalls U-förmig nach unten abgewinkelt ist zur Ausbildung eines Stengelbereichs 24. Wandungen 39 der Wagenkastenmodule 11 können beliebig hergestellt und aufgebaut sein, beispielsweise als Faserverbund, Faserkunststoffverbund und/oder in Sandwichbauweise.

Gemäß den in Fig. 7, 8 und 9 dargestellten Ausführungsbeispielen besitzen die Wandungen 39 im Bereich der Stirnseiten 36 über den Umfang verteilte Einsätze 37, deren Position übereinstimmt mit Bohrungen 38 der Kopplungsmodule 20, 21. Über die Einsätze 37 und Bohrungen 38 ist eine Verbindung der Kopplungsmodule 20, 21 mit den benachbarten Wagenkastenmodulen 11 möglich, wobei beispielsweise ein Verbindungselement wie eine Befestigungsschraube durch eine Bohrung 38 hindurchtritt und mit einem Einsatz 37 verschraubt wird. Die Einsätze 37 sind geeignet in die Wandung der Wagenkastenmodule 11 integriert, so dass diese eine gute Krafteinleitung und -übertragung gewährleisten.

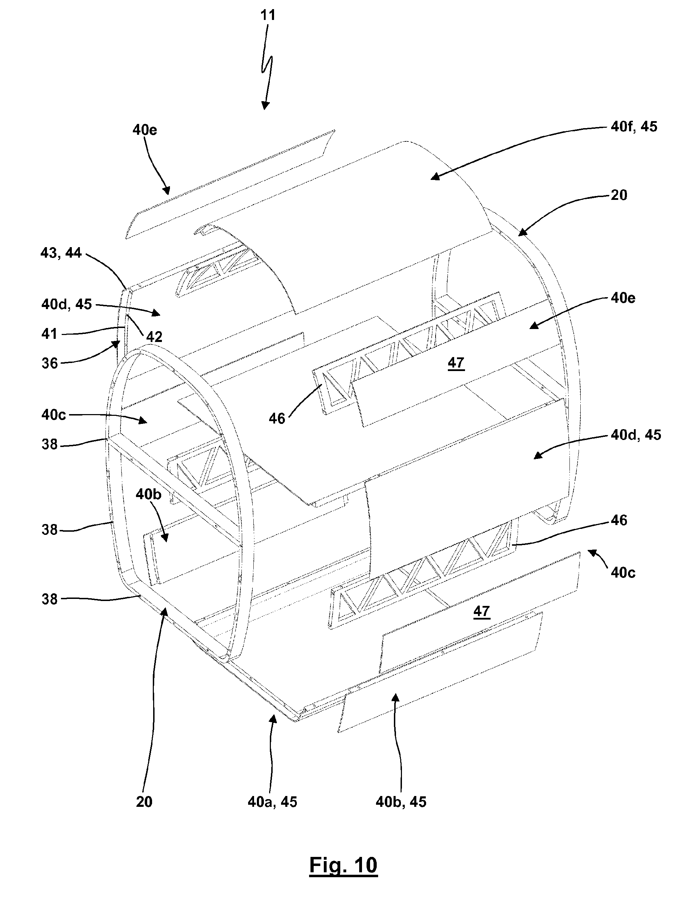

**Fig. 10** zeigt einen beispielhaften Aufbau eines Wagenkastenmoduls 11. Für diese Ausführungsform ist das Wagenkastenmodul 11 mit mehreren in Umfangsrichtung aneinander anschließenden Modulelementen gebildet, nämlich einem Boden-Modulelement 40a, unteren Seiten-Modulelementen 40b, unteren Fenster-Modulelementen 40c, mittleren Seiten-Modulelementen 40d, oberen Fenster-Modulelementen 40e und einem Dachelement 40f. Die Modulelemente 40a, 40b, 40d und 40f besitzen einen im Wesentlichen übereinstimmenden Aufbau, wobei diese allerdings entsprechend ihrem Einsatzort eine unterschiedliche Querschnittskontur besitzen. Diese Modulelemente 40a, 40b, 40d und 40f können als Faserverbund, Faserkunststoffverbund und/oder in Sandwichbauweise ausgebildet sein. Die quer zur Längsachse orientierten Stirnseiten besitzen Einsätze 37 oder Bohrungen, deren Umfangsanordnung der Umfangsanordnung der Bohrungen 38 in den Kopplungsmodulen 20 entspricht, so dass hier eine Verschraubung zwischen den Kopplungsmodulen 20 und den Modulelementen 40a, 40b, 40d und 40f erfolgen kann. Entsprechend besitzen die Modulelemente 40a, 40b, 40d, 40f im Bereich der Stirnseiten, die parallel zur Längsachse verlaufen, Einsätze 37 oder Bohrungen, über welche diese mit den benachbarten Modulelementen 40 verbindbar sind. Während die letztgenannten Stirnseiten vorzugsweise eben ausgebildet sind, sind die Stirnseiten 36, die quer zur Längsachse orientiert sind, vorzugsweise mit einer Stufe 41 ausgestattet, so dass Stirnflächen 42, die in zusammengebautem Zustand zur Anlage an den Kopplungsmodulen 20 kommen, außen von Fortsätzen 43, hier eine umlaufende Abdeckung 44, abgedeckt sind. Die Erstreckung der Abdeckung 44 in Richtung der Längsachse beträgt ungefähr die Hälfte der Erstreckung der Kopplungsmodule 20 in Richtung der Längsachse oder ist geringfügig kleiner als diese. Die genannten Modulelemente 40a, 40b, 40d, 40f bilden Flächenelemente 45, die beispielsweise als Faserverbund mit Kohlenstofffasern, Glasfasern, Basaltmaterial, Aramidfasern für eine Außenfläche gebildet sind mit Einbettung in eine duroplastische Matrix, insbesondere einen Epoxydharz. Ebenfalls möglich ist der Einsatz einer Sandwichstruktur für das Flächenelement, wobei zwischen einer innen liegenden sowie einer außen liegenden Deckschicht Stringer angeordnet sind und/oder Längsversteifungen verwendet sein können. Unter Umständen ist eine außen liegende Deckschicht mit einer geringeren Wandstärke oder mechanischen Festigkeit ausgebildet als eine innen liegende Deckschicht, die erweiterte Tragfunktionen ausübt. In diesem Fall kann die äußere Deckschicht als eine Art "Detektorschicht" für Schäden dienen, die beispielsweise durch aufgewirbelten Schotter entstehen und zu einer deutlich sichtbaren Beschädigung der Deckschicht führen.

Möglich ist der Einsatz eines Pultrusionsverfahrens, eines RTM-Prozesses, eines Harzinjektionsverfahrens oder eines Prepreg-Verfahrens zur Fertigung der Flächenelemente 45. Für die Verbindung der Modulelemente 40 miteinander und/oder mit den Kopplungsmodulen 20 können auch Führungs- oder Zentrierstifte Einsatz finden. Für den Fall, dass Schraub- oder Befestigungselemente in ihren Endbereichen zugänglich gemacht werden müssen, können Bohrungen zur Aufnahme dieser Befestigungselemente in sacklochartige Ausnehmungen der Modulelemente 40 und/oder der Kopplungsmodule 20 einmünden, in welchen dann eine Betätigung der Befestigungselemente über geeignete Werkzeuge erfolgen kann. Während die Modulelemente 40b, 40d und 40f im Querschnitt lediglich geringfügig konvex gekrümmt sind, ist das Modulelement 40a in erster Näherung mit einem U-förmigen Querschnitt ausgebildet, wobei der Grundschenkel des U den Bodenbereich 29 bildet, während die beiden Seitenschenkel des U leicht nach außen konvergieren und stirnseitig mit den Modulelementen 40b verbunden sind.

Die Modulelemente 40c, 40e sind mit einer rahmenförmigen Tragstruktur 46 ausgebildet, wobei die rahmenförmige Tragstruktur 46 im Bereich ihrer Stirnseiten Bohrungen oder Einsätze zur Befestigung der benachbarten Bauelemente besitzen kann. Vorzugsweise besitzt die rahmenförmige Tragstruktur 46 fachwerkartige Verstrebungen, wie dies für das in Fig. 10 dargestellte Ausführungsbeispiel der Fall ist. Auf der Innen- und/oder Außenseite stützt sich an der Tragstruktur 46 eine Fensterscheine 47 ab, die beispielsweise mit der Tragstruktur 46 verklebt ist. Die Außenfläche einer außen liegend angeordneten Fensterscheibe 47 geht vorzugsweise bündig über in die Außenfläche der benachbarten Modulelemente 40b, 40d bzw. 40d, 40f.

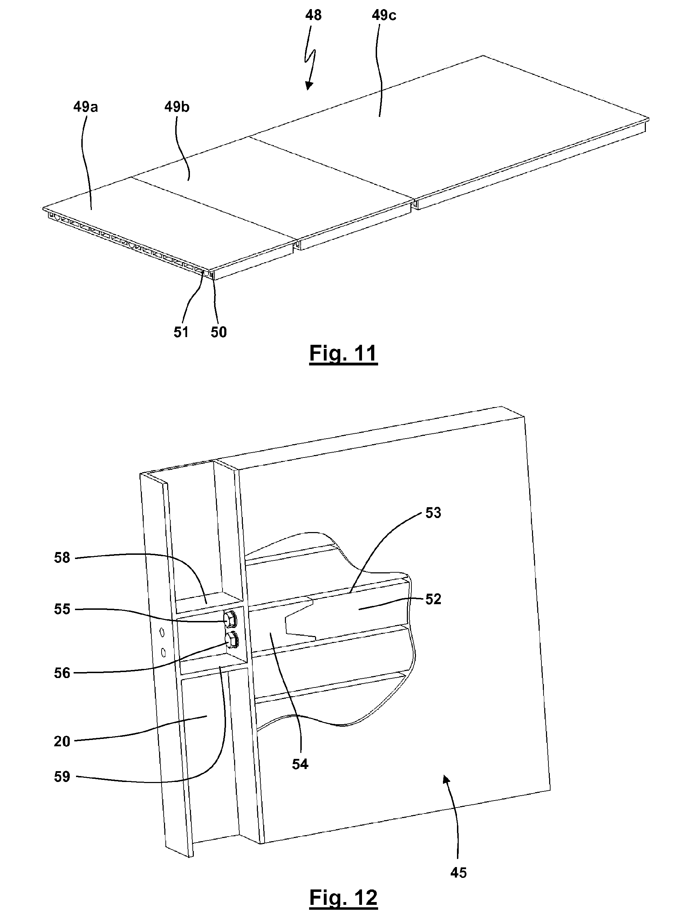

In **Fig. 11** ist eine Bodenplatte 48 dargestellt, die mit mehreren, hier drei Bodenpaneelen 49a, 49b, 49c gebildet ist. Die Bodenpaneele 49 bilden jeweils eine Stufe 50 mit Fortsätzen 51 im Bereich ihrer Stirnseiten aus. In montiertem Zustand sind die Bodenpaneele 49 derart auf die Querstreben 17 der Kopplungsmodule 20, 21 aufgelegt, dass die Fortsätze 51 auf der Oberseite der Querstreben 17 abgestützt sind. Die Stirnseiten der Bodenpaneele 49 können zur Anlage in axialer Richtung an den zugewandten Stirnseiten der Kopplungsmodule 20, 21 kommen oder mit diesen einen Spalt ausbilden. Ergänzende Befestigungsmöglichkeiten können genutzt werden, beispielsweise eine Verschraubung der Bodenpaneele 49 mit den Querstreben 17, ein Verkleben oder ähnliches. Weiterhin können sich die Bodenpaneele 49 in den außen liegenden Randbereichen an der Wandung 39 der Wagenkastenmodule 11 abstützen.

**Fig. 12** zeigt ein Detail eines Kopplungsmoduls 20, hier eines U-Profils, sowie eines Flächenelements 45. Das Flächenelement 45 verfügt über mindestens eine in Richtung der Längsachse 57 orientierte Ausnehmung 52, die für das dargestellte Ausführungsbeispiel von einem Trag- oder Versteifungsprofil 53 oder Stringer ausgebildet ist, welches in das Flächenelement 45 eingebettet ist. Die Ausnehmung 52 ist grundsätzlich in Richtung des Kopplungsmoduls 20 offen. Allerdings ist in die Ausnehmung 52 ein Einsatz 54 eingesetzt, welcher mit dem Tragprofil 53 verbunden ist, beispielsweise durch Verkleben. Der Einsatz 54 verfügt über in Richtung der Längsachse orientierte Gewindebohrungen, in welche sich durch entsprechende Bohrungen des Kopplungsmoduls 20 erstreckende Befestigungsbolzen 55, 56 eingeschraubt werden können zwecks Befestigung des Kopplungsmoduls 20 an dem Flächenelement 45. Für das dargestellte Ausführungsbeispiel sind Versteifungsstreben 58. 59 zur Versteifung des Kopplungsmodul 20 eingesetzt, welche oberhalb sowie unterhalb der und unmittelbar benachbart von den Befestigungsschrauben 55. 56 Seitenschenkel des U-förmigen Profils, mit welchem das Kopplungsmodul 20 gebildet ist, miteinander verbinden. Vorzugsweise sind die Versteifungsstreben 58, 59 in das U-förmige Profil eingeschweißt. Durchaus möglich ist aber auch, dass die Versteifungsstreben integraler Bestandteil des Profils sind.

Die erfindungsgemäße Lösung sieht insbesondere einen modular aufgebauten funktionsintegrierten Wagenkasten mit einem hohen Anteil an Faserkunststoffverbunden und Hybridwerkstoffen vor, um die angestrebte Gewichts- und Kostenreduktion bei gleichzeitiger Erfüllung der weiteren o. g. Anforderungen zu erzielen und die genannten Nachteile zu vermeiden.

Faserkunststoffverbunde (FKV) sind aufgrund ihres Schichtaufbaus mit hohen Festigkeits- und Steifigkeitskennwerten in der Laminatebene besonders für Anwendungen geeignet, bei denen in der Struktur ebenfalls zweidimensionale bzw. Membranspannungszustände herrschen. Günstig unter Leichtbaugesichtspunkten erweist sich u. U., wenn diese flächigen Strukturen möglichst ungestört sind, d. h. keine Ausschnitte etc. aufweisen. Hinsichtlich der Krafteinleitung in den Randbereichen existieren Lösungen, die eine Integration von metallischen Zwischenschichten in den Faserkunststoffverbund vorsehen (FKV/Metall-Hybrid). Dies bedeutet eine erheblich verbesserte Lochleibungsfestigkeit für Bolzenverbindungen, mit dem Vorteil, derartige Flächenelemente als tragende Schubfelder auf einfache Weise in eine Fachwerkstruktur oder anderweitige Struktur integrieren zu können.

Die vorgeschlagene Bauweise sieht insbesondere vor, den Wagenkasten durch einzelne Spanten zu segmentieren. An diese Spanten von z. B. U- oder (Rechteck-)Rohrquerschnitt werden bspw. alle weiteren Wand-, Dach- oder Bodenelemente des Wagenkasten angeschlossen. Wegen der in den Spanten herrschenden mehrachsigen Belastungs- und Spannungszustände sind diese Bauelemente vorzugsweise als Metall- oder FKV-Hybridstruktur gefertigt.

Für die Fenster- und Türbereiche wird auch vorgeschlagen, metallische oder FKV-Hybrid-Rahmenstrukturen in der Art eines Fachwerks zu verwenden, welche eine günstigere Spannungsverteilung ermöglichen. Diese Rahmenstrukturen verbinden die Spanten miteinander. Die noch offenen Bereiche können mittels der o. g. flächigen z. B. teilhybridisierten Faserkunststoffverbund-Flächenelementen geschlossen werden und zusammen den Wagenkasten bilden. Als Fügetechniken bieten sich insbesondere lösbare Bolzen- oder Schraubenverbindungen an, die große Vorteile bei reparaturbedingtem Austausch von Einzelelementen sowie bei Wiederverwertung und Entsorgung bieten.

Die Flächenelemente können sowohl als einschalige vorzugsweise aber als doppelschalige (Sandwich-)Elemente bspw. mit Kanälen in Fahrzeugslängsrichtung ausgebildet sein. Letzteres bietet insbesondere Vorteile bei der Integration von Leitungen, Lüftungskanälen etc. An den Spantanschlüssen können diese in den hohlen oder u-förmigen Spantquerschnitten bei Bedarf zusätzlich quer verzweigt werden.

Als kostengünstige Fertigungstechnologie bieten sich insbesondere kontinuierliche Verfahren, z. B. die Pultrusionstechnologie an. Damit ist es ebenfalls möglich, metallische Zwischenlagen bei der Fertigung zu integrieren und so (teil-)hybride Strukturelemente zu erzeugen. Vorzugsweise werden bereits komplett hybridisierte Schalenelemente gefertigt. Die metallischen Zwischenschichten (ca. 0,1 mm Schichtdicke) übernehmen dabei die Funktion einer (quasi-) isotropen Verstärkung in stärkerem Ausmaß als es durch Anordnung von Faserverbundlagen in verschiedenen Winkelorientierungen möglich wäre. Zusätzlich werden dazwischen ausschließlich Faserverbundverstärkungen (ca. 0,1...0,2 mm) in Längsrichtung orientiert, die eine belastungsgerechte Verstärkung des vorwiegend durch Längskräfte belasteten Wagenkastens bilden. Die Verwendung derartiger hybrider Schalenelemente bietet eine deutlich erhöhte Energieaufnahmefähigkeit bei Crash-Situationen als beispielsweise rein metallische Strukturen und verringert die Verletzungsgefahr gegenüber reinen Faserkunststoffverbunden, die bei Zerstörung eine gefährliche Splitterneigung zeigen.

Zur weiteren Aufnahme der Längskräfte ist es darüber hinaus möglich, vorzugsweise im Unterbereich entsprechende Längsträger in Längsrichtung des Wagenkastens zwischen den Spanten zu integrieren.

Mit der erfindungsgemäßen Bauweise lassen sich in einfacher Weise quer modularisierte Module herstellen, die bereits mit vorausgestattet mit komplettem Innenausbau in kosten- und zeitsparender Fertigung zum Wagenkasten integriert werden können. Durch entsprechende modulare Gestaltung, z. B. durch wechselbare Einlegeteile (Breiten-, Längen- und Gestaltvariation in bestimmten Grenzen) von RTM-Werkzeugen für die Herstellung der Faserverbund-Schalenelemente (wenn diese nicht im Pultrusionsverfahren gefertigt werden sollen) wird die Flexibilität zu vertretbaren Kosten deutlich erhöht.

Bei dem in Fig. 5 dargestellten Wagenkasten 10 handelt es sich vorzugsweise um einen Mittelwagen eines Gliedertriebzuges auf so genannten Jakobsdrehgestellen, d. h. jeweils zwei Wagenkästen stützen sich auf ein Drehgestell. Aufgrund des modularen Konzepts ist jedoch auf einfache Weise möglich auch Fahrzeuge mit klassischer Drehgestell- oder Achsanordnung darzustellen, da die Wagenkastenmodule auf einfache Weise anders gruppiert oder mit anderen Wagenkastenmodulen kombiniert werden können. Bezogen auf den Innenraum heißt das, es können z. B. parallel vorgefertigte Segmente mit bspw. Toiletten-, Bar- oder Restaurantausstattung mit konventionellen Sitzwagensegmenten verbunden werden. Ebenso sind bspw. in gewissen mechanischen und geometrischen Grenzen unter Beachtung des Lichtraumprofils unterschiedliche Fahrzeuglängen darstellbar.

Bei den Flächenelementen 45 handelt es sich insbesondere um vorwiegend schubbeanspruchte Hautfelder mit vorwiegend zweiachsigen oder Membranspannungszuständen, d. h. Beanspruchungen in der Flächenebene. Faserkunststoffverbunde sind aufgrund ihres Schichtaufbaus sehr gut für die Aufnahme zweiachsiger Beanspruchungen geeignet. Dadurch kann das Leichtbaupotential dieser Werkstoffe in hohem Maße ausgenutzt werden, insbesondere da es sich um ungestörte Hautfelder ohne Ausschnitte handelt, die nur an den Berandungen mit Umgebungsstrukturen gefügt werden. Dazu eignen sich bspw. entsprechende metallische Einsätze, sogenannte Inserts, insbesondere bei Verwendung von Sandwichstrukturen für die flächigen Verkleidungselemente.

Eine Alternative stellen sogenannte Hybridlaminate aus wechselweise geschichteten Faserkunststoffverbund- und Metallschichten dar, die über eine erheblich gesteigerte Lochleibungsfestigkeit verfügen und daher für Bolzenverbindungen besonders geeignet sind, vgl. auch die gemäß den Druckschriften DE 198 36 629 C1, DE 199 25 953 C1, DE 101 45 276 B4, DE 101 45 272 B4, DE 10 2004 045 845 B3 eingesetzten Flächenelemente.

Alle erforderlichen Ausschnitte und Bereiche, in denen mehrachsige Spannungszustände auftreten, können gezielt in Strukturen zusammengefasst werden, die aus isotropen Werkstoffen, vorzugsweise Metallen, oder aus hybriden Faserverbund-Metall-Kombinationen gefertigt werden. Dies betrifft bspw. Türbereiche, die zusätzlich mit fachwerkartigen Verstrebungen zwischen benachbarten Spanten verstärkt sein können, oder Fensterbereiche, die in der Art eines Fachwerkbrückenträgers ausgeführt sein können, mit dem die Verscheibung anschließend durch Klebung verbunden wird. Derart lassen sich grundsätzlich ausschnittbehaftete Bereiche zweckmäßig ausbilden und in die Gesamtstruktur integrieren.

Die Spanten weisen vorzugsweise einen u-förmigen oder Hohlprofilquerschnitt mit geeigneten Öffnungen auf. Damit ist es möglich, die flächigen Strukturelemente auf einfache Weise stirnseitig an den Spanten lösbar zu befestigen, bspw. mittels Bolzen- oder Schraubenverbindung oder genauso im Überlappstoß auf den Spantaußen- oder Innenflächen verbinden.

Zur Herstellung der flächigen Faserkunststoffverbund- oder auch Faserkunststoffverbund-Metall-Hybrid-Elemente, sowohl in Sandwich- als auch in einschaliger Bauweise eignen sich bekannte Fertigungsverfahren aus der Faserkunststoffverbundtechnologie wie Press- und RTM-Verfahren, insbesondere aber kostengünstige und hochautomatisierte Prozesse wie bspw. Pultrusions- oder Strangziehverfahren. Die Verwendung einer Sandwichbauweise ermöglicht auf einfache Weise die Integration weiterer Funktionen in integrierte Befestigungsschienen sowie Kanäle für bspw. Lüftung, Heizung, Klimatisierung, Kabelführungen, etc.

In der vorliegenden Anmeldung wird unter einem "Strangprofil" sowohl ein Strangpressprofil als auch ein Pultrusionsprofil als auch ein Stranggussprofil verstanden.

Möglich ist, dass in Wagenkastenmodulen 11 Bauelemente wie Fensterbereiche 30, Wandungen 39, Seitenwandungen 28, Modulelemente 40, Tragstrukturen 46 u. ä. lösbar mit den Kopplungsmodulen 20, 21 verbunden sind, was insbesondere über Verschraubungen erfolgen kann. Hierdurch wird eine Reparatur oder ein Austausch von Bestandteilen der Wagenkastenmodule ermöglicht.

Vorzugsweise ist mindestens ein Wagenkastenmodul 11 vor der Montage desselben mit einem Kopplungsmodul 20, 21 bereits mit einer Innenausstattung, insbesondere einer Verkleidung, Bestuhlung, Tischen und/oder Ablageflächen, ausgestattet.

Ein Wagenkastenmodul 11 kann mit mehreren miteinander verbundenen Modulelementen 40 gebildet sein.

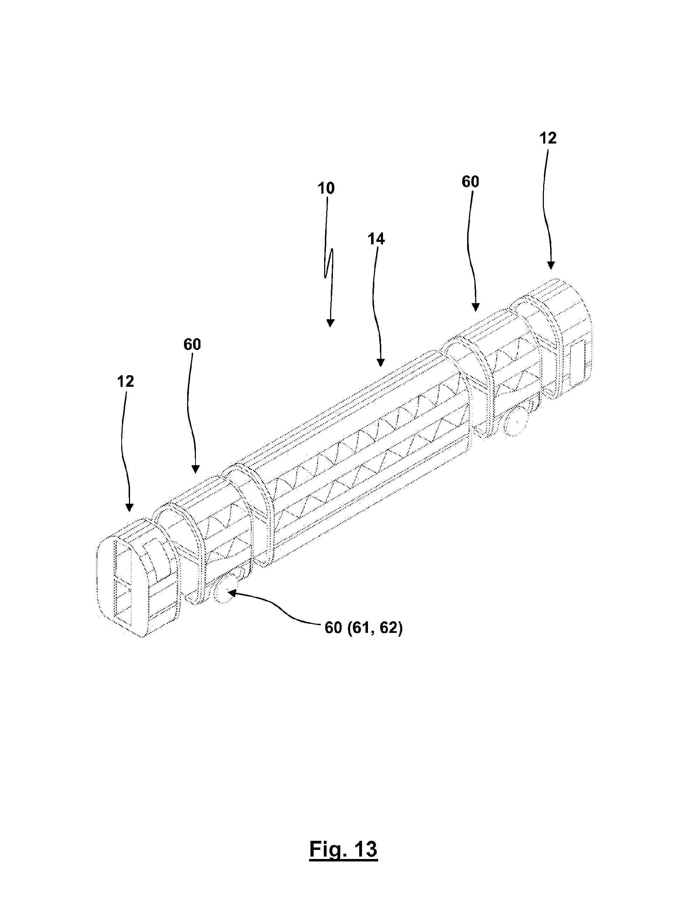

**Fig. 13** zeigt einen Wagenkasten 10 in alternativer Ausgestaltung, welcher mit Endmodulen 12, Achsmodulen 60 sowie einem einzigen Fahrgastraummodul 14 gebildet ist. Bei dem dargestellten Wagenkasten 10 handelt es sich um einen zweistöckigen Wagenkasten, so dass die genannten Module mit Kopplungsmodulen 20, 21 gebildet sind, welche über Querelemente 17 verfügen. Zu erkennen ist in Fig. 13, dass die Endmodule 12 in beiden Stockwerken, also ober- und unterhalb des Querelements 17, über Durchgangstüren zur Ermöglichung des Durchgangs zu einem benachbarten Wagenkasten 10 verfügen. Die beiden Endmodule 12 verfügen auf gegenüberliegenden Seiten über Türen, die jeweils einen Eintritt in das Endmodul 12 in ein Stockwerk ermöglichen. Hierbei sind auf einer Fahrzeugseite eines Wagenkastens 10 die Eintrittstüren für ein Stockwerk jeweils in einem Endmodul 12 angeordnet. Anders gesagt befinden sich die Eingangstüren der Endmodule 12 für dasselbe Stockwerk auf gegenüberliegenden Fahrzeugseiten an demselben Wagenkasten 10.

Die Achsmodule 60 tragen unmittelbar das Fahrwerk 61, eine Achse 62 oder ein Drehgestell 63. Hierzu kann das Achsmodul 60 im Bodenbereich über ergänzende Versteifungen oder Längsträger verfügen, an welche das Fahrwerk 61, die Achse 62 oder das Drehgestell 63 angeschraubt werden kann.

Für die in Fig. 13 dargestellte Ausführungsform sind somit das Einstiegsmodul und das Endmodul als ein integrales Endmodul 12 ausgebildet. In das Achsmodul 60 kann ergänzend eine Antriebstechnologie integriert sein, über welche der Wagenkasten 10 antreibbar ist, wobei eine Steuerung eines Antriebsaggregates über Steuerleitungen erfolgt, die, insbesondere wie zuvor beschrieben, zwischen den einzelnen Wagenkastenmodulen 20, 21 verlaufen und mit benachbarten Wagenkästen gekoppelt sein können. Ebenfalls möglich ist, dass eine Klimatechnik mit den zugeordneten Klimageräten in das Achsmodul 60 integriert ist mit Kommunikation von entsprechenden klimatisierenden Kanälen, Leitungen und Auslässen zu benachbarten Wagenkastenmodulen.

Vorzugsweise besitzt das Fahrgastraummodul 14 eine größere Länge als die Endmodule 12 und die Achsmodule 60. Um lediglich ein Beispiel zu nennen, beträgt die Länge der Endmodule 12 zwei Meter, die Länge der Achsmodule 60 zwei Meter und die Länge des Fahrgastraummoduls 14 zwölf Meter, wobei Abweichungen der zuvor genannten Längenbereiche um ± 20, 50 oder 80 % möglich sind.

U. U. sind die Wagenkastenmodule 11 versteifende Längsträger im Bereich des Querelements 17 angeordnet und an diesen angebracht.

### BEZUGSZEICHENLISTE

- 1: Stirnseite
- 2: Stirnseite
- 3: Dach
- 4: Seitenwand
- 5: Boden
- 6: Tragstruktur
- 7: Verkleidung
- 8: Strangprofil
- 9: Schweißnaht
- 10: Wagenkasten
- 11: Wagenkastenmodul
- 12: Endmodul
- 13: Einstiegsmodul
- 14: Fahrgastraummodul
- 15: Ausnehmung
- 16: Ausnehmung
- 17: Querelement
- 18: Innenraum
- 19: Innenraum
- 20: Kopplungsmodul
- 21: Kopplungsmodul
- 22: Fensterbereich
- 23: Anbindungsbereich
- 24: Stengelbereich
- 25: Kopfbereich
- 26: Ausnehmung
- 27: Stufe
- 28: Seitenwandung
- 29: Bodenbereich
- 30: Fensterbereich
- 31: Türbereich
- 32: Fensterbereich
- 33: Ringstruktur
- 34: Spant
- 35: Querstrebe
- 36: Stirnseite
- 37: Einsatz
- 38: Bohrung
- 39: Wandung
- 40: Modulelement
- 41: Stufe
- 42: Stirnfläche
- 43: Fortsatz
- 44: Abdeckung
- 45: Flächenelement
- 46: Tragstruktur
- 47: Fensterscheibe
- 48: Bodenplatte
- 49: Bodenpaneel
- 50: Stufe
- 51: Fortsatz
- 52: Ausnehmung
- 53: Tragprofil
- 54: Einsatz
- 55: Befestigungsbolzen
- 56: Befestigungsbolzen
- 57: Längsachse
- 58: Versteifungsstrebe
- 59: Versteifungsstrebe
- 60: Achsmodul
- 61: Fahrwerk
- 62: Achse
- 63: Drehgestell

## Patentansprüche

1. Wagenkasten (10) für ein Personen-Schienenfahrzeug mit mehreren in Umfangsrichtung um eine Längsachse (57) geschlossenen und in Richtung der Längsachse aneinander anschließenden Wagenkastenmodulen (11), wobei benachbarte Wagenkastenmodule (11) über in Umfangrichtung geschlossene ringartige Kopplungsmodule (20; 21) miteinander verbunden sind und die Wagenkastenmodule (11) selbsttragend ausgebildet sind ohne gemeinsame, sich über mehrere Wagenkastenmodule (11) erstreckende Tragelemente, und die Übertragung von Kräften zwischen benachbarten Wagenkastenmodule (11) über die Kopplungsmodule (20; 21) erfolgt.

2. Wagenkasten (10) nach Anspruch 1, **dadurch gekennzeichnet, dass** die Kopplungsmodule (20; 21) als Spanten (34) oder Stranggussprofil gebildet sind.

3. Wagenkasten (10) nach einem der vorhergehenden Ansprüche, **dadurch gekennzeichnet, dass** die Wagenkastenmodule (11) über
a) Stirnflächen (42) verfügen, welche in Richtung der Längsachse (57) an Gegenflächen der Kopplungsmodule (20; 21) abgestützt sind, und
b) außenliegend von den Stirnflächen (42) angeordnete Fortsätze (43) oder Abdeckungen verfügen, welche die Kopplungsmodule (20; 21) von außen abdecken.

4. Wagenkasten (10) nach einem der vorhergehenden Ansprüche, **dadurch gekennzeichnet, dass** die Wagenkastenmodule (11) im Bereich ihrer Stirnseiten (36) mindestens einen Anschluss besitzen, welcher über ein von einem Kopplungsmodul (20; 21) gebildetes oder getragenes Verbindungselement mit mindestens einem Anschluss eines benachbarten Wagenkastenmoduls (11) verbunden ist.

5. Wagenkasten (10) nach mindestens einem der vorhergehenden Ansprüche, **dadurch gekennzeichnet, dass** zwischen benachbarte Wagenkastenmodule (11) und die zugeordneten Kopplungsmodule (20; 21) ein Dichtmaterial zwischengeordnet ist.

6. Wagenkasten (10) nach Anspruch 9, **dadurch gekennzeichnet, dass** ein Modulelement (40a; 40b; 40d; 40f) als Flächenelement (45) mit einer Faserverbundbauweise und/oder in Sandwichbauweise ausgebildet ist.

7. Wagenkasten (10) nach einem der vorhergehenden Ansprüche, **dadurch gekennzeichnet, dass** sich in Richtung der Längsachse (57) eines Modulelements (40) Kanäle und/oder Leitungen erstrecken.

8. Wagenkasten (10) nach einem der vorhergehenden Ansprüche, **dadurch gekennzeichnet, dass** in einem Modulelement (40) des Wagenkastenmoduls (11) Einsätze (37; 54) angeordnet sind zur Aufnahme oder Abstützung eines Verbindungsbolzens oder einer Verbindungsschraube.

9. Wagenkasten (10) nach einem der vorhergehenden Ansprüche, **dadurch gekennzeichnet, dass** sich in einem Modulelement (40) des Wagenkastenmoduls (11) ein Tragprofil (53) erstreckt mit einer in die Stirnseite des Modulelements (40) mündenden Ausnehmung (52), in welcher ein Einsatz (54) befestigt ist, an welchem sich ein Verbindungsbolzen oder eine Verbindungsschraube abstützt.

10. Wagenkasten (10) nach einem der vorhergehenden Ansprüche, **dadurch gekennzeichnet, dass** ein Modulelement (40) des Wagenkastenmoduls (11) mit einer rahmen- oder fachwerkartigen Tragstruktur (46) gebildet ist, an welcher innenliegend und/oder außenliegend eine durchsichtige Fensterscheibe (47) abgestützt ist.

11. Wagenkasten (10) nach einem der vorhergehenden Ansprüche, **dadurch gekennzeichnet, dass** der Wagenkasten (10) mit
a) zwei endseitigen Endmodulen (12),
b) zwei jeweils an ein Endmodul (12) anschließenden Einstiegs-, Antriebs- und/oder Achsmodulen (13) und
c) einem zwischen den Einstiegs-, Antriebs- und/oder Achsmodulen (13) angeordneten Fahrgastraummodul (14)
gebildet ist.

12. Wagenkasten (10) nach einem der vorhergehenden Ansprüche, **dadurch gekennzeichnet, dass** das Wagenkastenmodul (11) und/oder das Kopplungsmodul (20; 21) eine obere durchgehende Ausnehmung (16) sowie eine untere durchgehende Ausnehmung (15) ausbilden, welche durch ein Querelement (17) voneinander getrennt sind.

13. Wagenkasten (10) nach Anspruch 12, **dadurch gekennzeichnet, dass** Bodenpaneele (49) und/oder Deckenpaneele zur Trennung der oberen Ausnehmung (16) und der unteren Ausnehmung (15) auf einem Querelement (17) des Kopplungsmoduls (20; 21) abgestützt sind, während eine Abstützung der Bodenpaneele (49) und/oder Deckenpaneele im Bereich des Wagenkastenmoduls (11) lediglich im äußeren Randbereich an dem Wagenkastenmodul (11) erfolgt.

14. Wagenkasten (10) nach einem der vorhergehenden Ansprüche, **dadurch gekennzeichnet, dass** ein Wagenkastenmodul als Achsmodul ausgebildet ist, an welchem ein Drehgestell oder ein Fahrwerk abgestützt ist.

15. Wagenkasten (10) nach einem der vorhergehenden Ansprüche, **dadurch gekennzeichnet, dass** ein Endmodul auf einem zwei benachbarte Wagenkästen abstützenden Drehgestell, insbesondere einem Jakobs-Drehgestell, abgestützt ist.

16. Wagenkasten (10) nach einem der vorhergehenden Ansprüche, **dadurch gekennzeichnet, dass** Wagenkastenmodule über Längsträger versteift sind, welche endseitig an einem Kopplungsmodul, einer Tragstruktur (46) und/oder einem mittragenden Fensterband abgestützt sind.
